# EUROPEAN PATENT SPECIFICATION

(11) **EP 3 671 665 B1**
(45) Date of publication and mention of the grant of the patent: **07.10.2026**
(21) Application number: 18306729.7
(22) Date of filing: 18.12.2018
(51) Int. Cl.: G07C 9/00, G06Q 10/08, A47G 29/14, G07F 17/12

(54) **PARCEL LOCKER SYSTEM WITH AUTONOMOUS COMPARTMENTS**
PAKETSCHLIESSFACHSYSTEM MIT AUTONOMEN FÄCHERN
SYSTÈME DE CASIER DE COLIS À COMPARTIMENTS AUTONOMES

(43) Date of publication of application: 24.06.2020
(73) Proprietor: Quadient Technologies France, 92220 Bagneux (FR)
(72) Inventor: SANTANGELI, GABRIEL, 91600 SAVIGNY SUR ORGE (FR); ERAUD, THOMAS, 84000 AVIGNON (FR); YVOZ, ARNAUD, 84300 TAILLADES (FR)
(74) Representative: Cabinet Beau de Loménie

(56) References cited:
- EP-A1- 3 306 577
- WO-A2-2017/163018
- US-A1- 2008 246 587

## Description

### FIELD OF THE INVENTION

The present invention relates to a system and methods for depositing shipments by a delivery agent, into electronic parcel lockers constituted of several lockable compartments, and for picking-up these shipments thereafter.

### PRIOR ART - BACKGROUND OF THE INVENTION

Electronic parcel locker systems are used for dropping-off, storing and picking up various kinds of shipments such as parcels or packages. These parcel locker systems typically are used by carrier agents for depositing shipments, which are then picked-up from the parcel locker by recipients. Electronic parcel lockers have a user interface for the carrier agent or the recipient to operate the parcel locker, which is used for depositing the shipment in the case of the carrier agent or for picking-up the shipment in the case of the recipient. This interface allows the user to enter information for operating the parcel locker and allows the parcel locker to provide information back to the user. For recent electronic parcel lockers, this functionality typically is fulfilled by a touchscreen. This user interface also is used to capture information attached to the shipment or to some user identification means. This functionality can be fulfilled by barcode readers reading printed barcodes or other technologies such as radio-frequency communication for reading RFID tags or near field communication. Electronic parcel locker systems generally comprise a network of parcel lockers, all communicating directly with a remote shipping system in charge of managing the network of parcel lockers, and eventually also managing data exchanges with the carrier information systems. The communication between each parcel locker and the remote shipping system is performed by long distance communication technologies such as 3G- 4G or GSM.

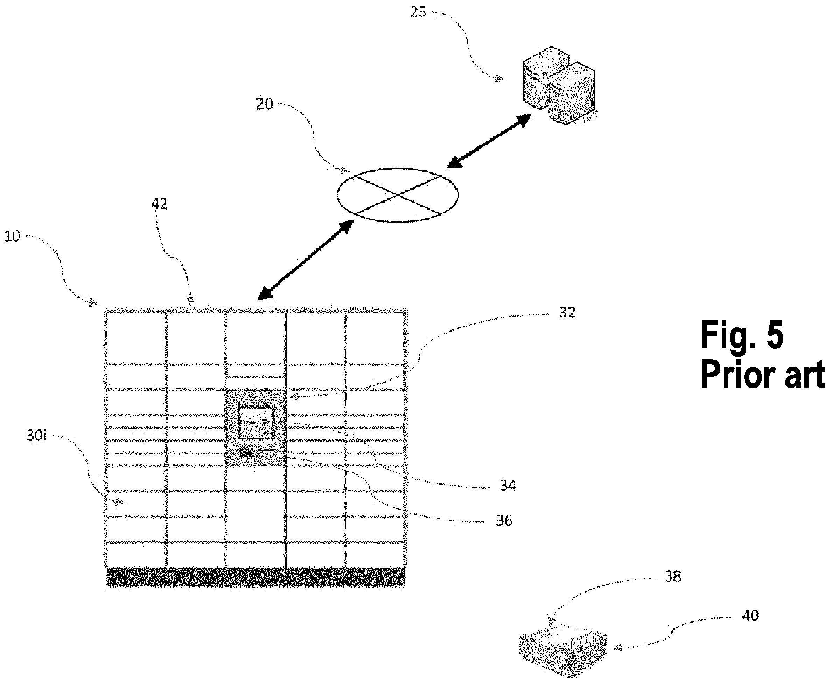

Figure 5 describes a prior art electronic parcel locker system, which comprises an electronic parcel locker 10 communicating via a long distance communication network 20 with a remote shipping system 25, which generates authorization codes for accessing the electronic parcel locker and communicates these codes directly to the electronic parcel locker and manages data regarding the shipments handled by the electronic parcel locker. The electronic parcel locker comprises a series of compartments 30i with different sizes and equipped with an electronically controlled door. The electronic parcel locker operation, and in particular the opening and closing of the compartment doors, is controlled by a central control unit 32. This central control unit 32 controls the communication with the remote shipping system 25 and the parcel locker user interface, which typically includes a touchscreen 34 and a barcode reader 36. When a carrier agent comes for depositing parcels into the electronic parcel locker 10, the identification 38 of each parcel 40 must be captured by the electronic parcel locker and is associated by the central control unit with the compartment where it is deposited. For tracking purposes, the identification 38 may be in the form of a barcode label affixed onto each parcel 40. Generally, compartments have a standard width and are assembled vertically into columns 42.

Such prior art electronic parcel locker systems have the following characteristics, which can become problematic as explained further below. The electronic parcel locker communicates directly with the remote shipping system for transferring local data including events occurring within the electronic parcel locker, compartments status or data captured by the electronic parcel locker such as the parcel identifications. Additionally, prior art electronic parcel locker are costly for manufacturing plant and complex for transportation and installation due to their volume.

Prior art electronic parcel locker systems and their associated architecture have several issues. An electrical power connection is required, which can often be difficult to set up. The need for long distance communication with the server or servers of the remote shipping system imposes either the installation of a physical communication cable connecting the electronic parcel locker to the long distance communication network or imposes the usage of a wireless long distance communication system. In the case of wireless long distance communication, an additional issue is that it does not operate everywhere. In particular, electronic parcel lockers cannot be straightly installed in underground locations where wireless long distance communication does not propagate. Another issue is the complexity and cost involved with prior art electronic parcel lockers requiring expert competency. An electronic parcel locker is assembled in a manufacturing plant and can be shipped as a complete unit to the installation location. However, as a complete unit can be quite voluminous, vertical columns of compartments are typically pre-assembled and partially pre-wired in a manufacturing plant and the columns are shipped separately to the installation location. Expert competency is required for connecting the columns both mechanically and electrically, and for starting the system. Their lack of modularity does not allow for easily swapping compartments or for easily upgrading or changing their configuration on site. Overall, prior art electronic parcel lockers are expensive systems, involving costly transportation and installation and servicing.

WO 2017/163018 A2 relates to a locker assembly with autonomous lockers. The lockers are battery powered and are communicating only using short range communication.

So there is a need for a new generation of parcel lockers allowing for cost reduction and more flexibility, including in particular compartment swaps.

### OBJECT AND DEFINITION OF THE INVENTION

The object of the invention consists in providing a parcel locker system with some autonomous compartments and therefore overcoming the above drawbacks.

This object is achieved by providing an electronic locker system for parcel deposit and pick-up according to claim 1.

According to a feature of the invention, several of the at least one autonomous compartment are mechanically fastened together to form a column, and preferably several of the columns of the at least one autonomous compartments are mechanically fastened together to form the at least one parcel locker, therefore allowing for simple installation and configuration upgrade and servicing, including compartment swaps, so that a site owner hosting a new generation parcel locker can install, upgrade and service this new generation parcel locker without the intervention of an expert technician.

In a preferred embodiment, a request from the at least one mobile device for establishing a local communication with the at least one autonomous compartment via the short distance communication includes an authenticator comprising or sent with a second unique compartment identification wherein the firmware is configured for checking for a match between the first unique compartment identification stored in the locking module and the second unique compartment identification. Preferably, the authenticator is unique.

In another embodiment, the locking module includes a non-volatile memory storing a functions table comprising functions available for the at least one autonomous compartment and which can be run by the processor, and advantageously the authenticator includes a privileges mask identifying functions authorized for operating the at least one autonomous compartment amongst functions within the functions table, where preferably the privileges mask consists in a series of bits wherein a bit of the series of bits corresponds to a function of the functions table and a value of the bit indicates whether the function is authorized or not authorized.

In a particular embodiment, the the firmware is configured for emitting the broadcasted short message with a repetition time period of 250ms within a range +/- 100ms, with a listening time window of 10ms within a range +20ms/-0ms, with a number of channels of two (2) or of three (3) preferably, and with a power emission parameter of 0dBm within a range +4dBm/- 0dBm.

According to a feature of the invention, the remote shipping system is configured for receiving and storing credentials of a user of the at least one parcel locker and for generating the authenticator and for generating the privileges mask based on the credentials of the user.

In a preferred embodiment, the remote shipping system comprises a database configured for storing a parcel locker configuration associated with the at least one parcel locker including: the second unique compartment identification associated with the at least one autonomous compartment, a unique parcel identification, a compartment broadcasting table, and a compartment status table; wherein the at least one mobile device is configured for receiving the parcel locker configuration from the remote shipping system in order to operate the at least one parcel locker.

Advantageously, the compartment status table includes a status of the door and a status of the at least one compartment including whether the at least one compartment is locked or unlocked or whether the at least one compartment is damaged or operational or whether the at least one compartment is clean or dirtied.

According to another feature of the invention, the compartment broadcasting table includes the repetition time period parameter, the listening time window parameter, the number of channels and the power emission parameter wherein the at least one mobile device is configured for receiving the compartment broadcasting table and transferring it to the at least one autonomous compartment.

In another embodiment, the non-volatile memory of the locking module stores the first unique compartment identification, a low power status, an events limit indicating whether a limit for events stored in the locking module has been reached, and compartment data comprising an events table wherein the firmware is configured for communicating the compartment data via the at least one mobile device to the remote shipping server.

In a particular embodiment, the locking module comprises a lock interface and an authorization code uniquely associated with the unique parcel identification corresponding to a parcel deposited in the at least one autonomous compartment so that a parcel recipient without a mobile device may pick-up a parcel by entering the authorization code via the lock interface wherein the remote shipping server is configured for generating and storing the authorization code and for transmitting the authorization code to the locking module via the mobile device.

Preferably, the locking module is mounted on the door.

In another particular embodiment, the at least one mobile device is fixedly mounted next to the at least one parcel locker or directly onto the at least one parcel locker and, preferably, connected to a local electrical network.

The invention also concerns a method for operating at least one parcel locker according to claim 7.

Preferably, the authenticator is unique.

In a preferred embodiment, the at least one mobile device requests from the remote shipping system the authenticator for establishing a communication with the at least one autonomous compartment after capturing a first the broadcasted short message including the first unique compartment identification and the remote shipping system identifies the at least one parcel locker based on the first unique compartment identification received from the at least one mobile device.

In a particular embodiment, the authenticator is generated by the remote shipping system and includes or is sent with a second unique compartment identification, and advantageously, for establishing a communication or for authorizing an access, the at least one autonomous compartment validates the authenticator received from the at least one mobile device and compares the second unique compartment identification with the first unique compartment identification stored in the locking module.

According to a feature of the invention, the authenticator includes a privileges mask generated by the remote shipping system based on credentials of a user and wherein the at least one autonomous compartment uses the privileges mask for validating access to functions, which are authorized for the user, and preferably, the at least one autonomous compartment identifies a function targeted by the request within a functions table and checks whether the function is authorized by the privileges mask.

According to another feature of the invention, the locking module stores an events limit indicating whether a limit for events stored in the locking module has been reached and updates the events limit following on a transferring events stored by the locking module to the remote shipping server.

In another embodiment, the broadcasted short message comprises an events limit indicating whether a limit for events stored in the locking module has been reached and wherein the at least one mobile device checks on the events limit for establishing whether a connection with the locking module is required for transferring events stored by the at least one autonomous compartment to the remote shipping system.

According to a feature of the invention, the broadcasted short message is emitted according to parameters of a compartment broadcasting table stored in the locking module, and preferably, the compartment broadcasting table is downloaded from the remote shipping server, and advantageously, the parameters of the compartment broadcasting table are adjusted via a wizard sub-program installed on the at least one mobile device.

According to another feature of the invention, the at least one mobile device is used as part of a network of mobile devices for establishing an asynchronous bidirectional multi-channel communication between the remote shipping system and the at least one autonomous compartment of the at least one parcel locker, and advantageously the remote shipping server selects preferred mobile devices according to preset rules for addressing a message to the at least one autonomous compartment, wherein preferably one of the preset rules is that the message is addressed to the preferred mobile devices, which are making requests to the remote shipping system regarding the at least one autonomous compartment, therefore, allowing for parcel lockers to be operated in areas not covered by long distance wireless communication.

According to a feature of the invention, the at least one mobile device is used as a user interface for operating the at least one autonomous compartment of the at least one parcel locker.

According to another feature of the invention, a program installed on the at least one mobile device is instantiated according to a user category.

In a preferred embodiment, the shipping remote server provides a parcel locker configuration to the at least one mobile device for the at least one mobile device to operate the at least one parcel locker, and preferably the remote shipping server identifies the parcel locker configuration for download to the at least one mobile device based on the first unique compartment identification comprised in the broadcasted short message and transferred to the remote shipping server by the at least one mobile device.

According to a feature of the invention, the at least one autonomous compartment establishes, based on the parcel locker configuration, the number of compartments, which constitute the at least one parcel locker, and checks that a broadcasted short message is received from all of the at least one autonomous compartment of the at least one parcel locker, wherein advantageously the parcel locker configuration is received from the remote shipping server before the user arrives near the at least one parcel locker so that a parcel deposit can start before a broadcasted short message is received by the at least one mobile device from the at least one parcel locker, and therefore, allowing for parcel lockers to be operated in areas not covered by long distance wireless communication.

In a particular embodiment, the at least one mobile device captures a parcel identification attached to a parcel to be deposited in the at least one parcel locker and the at least one mobile device, based on the parcel locker configuration, selects an autonomous compartment for deposit according to preset rules, wherein preferably the preset rules include a selected autonomous compartment is empty and a size of the selected autonomous compartment matches a size of a parcel for deposit or a rotation amongst autonomous compartments for ensuring a homogeneous usage of autonomous compartments in order to apportion power consumption or to prevent early wear.

According to another feature of the invention, after capturing the parcel identification attached to the parcel to be deposited, the at least one mobile device checks for a match between the parcel identification and a list of identifications of parcels for deposit, and preferably the list of identifications is provided by the remote shipping system to the at least one mobile device.

In a particular embodiment, the method further comprises: sending a request by the at least one mobile to the at least one autonomous compartment for unlocking, wherein the request includes the authenticator, unlocking by the at least one autonomous compartment after authorizing the request, and locking by the at least one autonomous compartment after deposit of the parcel, and advantageously the locking module activates a visual indicator for indicating which door should be opened for parcel deposit.

In another embodiment, after transfer of events stored by the locking module to the remote shipping server via the at least one mobile device, the remote shipping system generates a notification regarding the parcel deposited in the at least one autonomous compartment and including information for picking-up the parcel.

In a particular embodiment, when a parcel is due for deposit in the at least one autonomous compartment, the at least one mobile device receives from the remote shipping server an authorization code, which is generated by the remote shipping server, and transfers the authorization code to the at least one autonomous compartment so that a parcel recipient without a mobile device may pick-up the parcel by entering the authorization code via a lock interface, wherein preferably the authorization code is unique and uniquely associated with a unique parcel identification of the parcel, and advantageously the authorization code is a one-time code, which can be used only once by a parcel recipient.

According to a feature of the invention, the authorization code is requested by the at least one mobile device at the time of deposit of the parcel after the parcel for deposit has been identified.

According to another feature of the invention, the authorization code is generated and communicated by the remote shipping server to the at least one mobile device for temporary storage before or when a carrier agent plans for a daily delivery into the at least one parcel locker, therefore, allowing for parcel lockers to be operated in areas not covered by long distance wireless communication.

Advantageously, the information in the notification for picking-up the parcel comprises the authorization code and a location of the at least one parcel locker and the parcel identification and a compartment identifier corresponding to a physical identifier attached on a visible part of the at least one autonomous compartment.

In another embodiment, the notification received by the at least one mobile device comprises the parcel identification and includes a functionality designed for transferring the authenticator to the at least one mobile device.

In a particular embodiment, the method further comprises: activating the functionality and transferring the parcel identification to the at least one mobile device, accessing a web application hosted in the remote shipping system, having, via the web application, the at least one mobile device requesting from the remote shipping system the authenticator for picking-up a parcel, transferring the parcel identification to the remote shipping system from the at least one mobile device, identifying by the remote shipping system the at least one parcel locker and the at least one autonomous compartment based on the parcel identification, generating by the remote shipping system the authenticator, which is uniquely associated with the at least one autonomous compartment and which includes or is sent with a second unique compartment identification retrieved stored in the remote shipping system, and transferring the authenticator to the at least one mobile device.

Preferably, data including the authenticator are encapsulated within the functionality and, when the functionality is activated, data are transferred to the at least one mobile device.

In another embodiment, the method further comprises for automatic unlock: capturing by the at least one mobile device the broadcasted short messages emitted by the at least one autonomous compartment, wherein the broadcasted short message includes the unique compartment identification, checking by the at least one mobile device for a match between the second unique compartment identification received from the remote shipping system and the first unique compartment identification received from the at least one autonomous compartment for identifying which compartment contains the recipient's parcel, sending, in case of match, by the at least one mobile device a response message to the at least one autonomous compartment for establishing a communication so that the response message can be captured within a limited listening time window of the at least one autonomous compartment, wherein the response message includes the authenticator provided by the remote shipping server, validating by the at least one autonomous compartment the authenticator for establishing a communication with the at least one mobile device, sending by the at least one mobile device a request for the at least one autonomous compartment to unlock, and unlocking by the at least one autonomous compartment for parcel pick-up.

### BRIEF DESCRIPTION OF THE DRAWINGS

Other aspects, features and advantages of the teachings of the invention will become clearer to those ordinary skilled in the art upon review of the following description in conjunction with the accompanying drawings where:
Figure 1 represents an architecture of a parcel locker system according to an embodiment of the invention;
Figure 2 illustrates an architecture of a locking module according to an embodiment of the invention;
Figure 3 illustrates a process according to an embodiment of the invention for depositing parcels by a carrier agent according to an embodiment of the invention;
Figure 4 illustrates a process according to an embodiment of the invention for picking-up parcels by a recipient using his mobile device for operating a compartment; and
Figure 5 illustrates the prior art electronic parcel locker system.

### DETAILLED DESCRIPTION

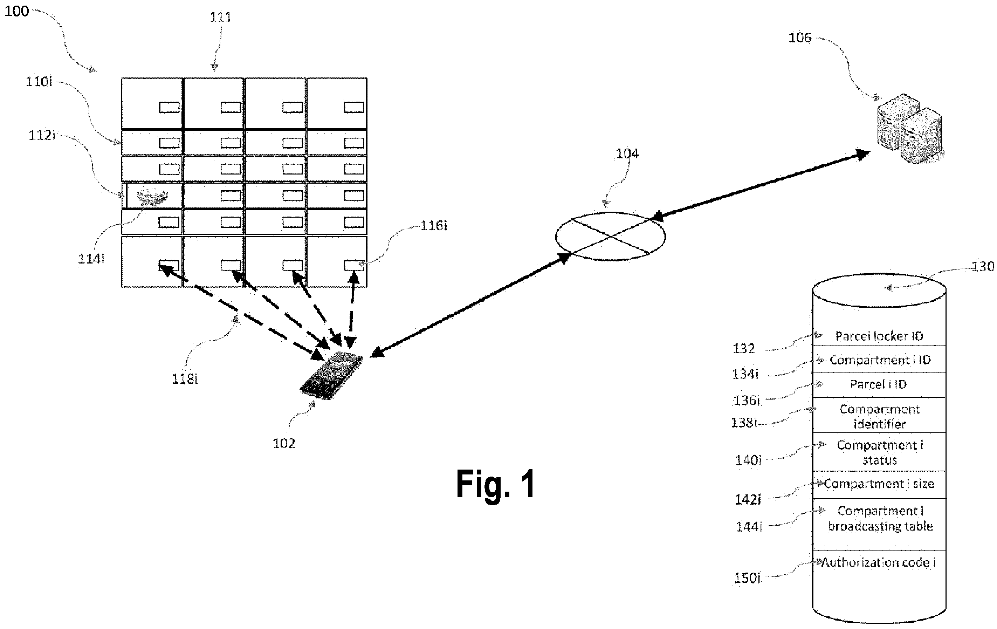

According to the invention, to avoid the necessity for power connection and for long distance communication and to allow for simple installation and configuration upgrade, autonomous lockers interacting locally with mobile devices via short distance wireless communication are disclosed. Figure 1 illustrates an embodiment of a parcel locker system of the invention comprising a parcel locker 100, a mobile device 102 communicating via a long distance communication network 104 based on a technologies such as 3G-4G or GSM with a remote shipping system 106, which manages authorization access to the parcel locker 100 and manages data regarding the shipments handled by the parcel locker 100. The parcel locker 100 is constituted of autonomous compartments 110i, which can be piled up and mechanically fastened together to form a column 111. An autonomous compartment is characterized by a design without any power connection or long distance communication, allowing for simple installation and configuration upgrade and servicing. The autonomous compartment 110i having a same width may have different heights to cope for best matching with different parcel sizes. The columns 111 can then be mechanically fastened together to form a larger parcel locker unit. Each compartment 110i is equipped on the front with a hinged door 112i, which when opened allows for depositing in the compartment or retrieving from the compartment a parcel 114i. Each compartment 110i comprises a communicating locking module 116i, which electronically controls the locking and unlocking of the compartment door. In a preferred embodiment, the communicating locking module is mounted on the door 112i, therefore allowing for a simple replacement of the locking module by replacing the hinged door. Each locking module 116i can establish a local communication with a nearby mobile device 102 via a short distance communication 118i, such as WIFI, IR or Bluetooth.

The remote shipping system comprises a database system 130, which may include several databases eventually installed on several server systems operated by shipping carriers or by a service company owning or managing a parcel locker park. The database system 130 stores configurations of all the parcel lockers 100 to be controlled by the remote shipping system. Each parcel locker configuration (PL configuration) includes a unique parcel locker identification 132, and for each compartment of the parcel locker, a unique compartment identification 134i and a unique parcel identification 136i, if a parcel is deposited in the compartment 134i. The PL configuration also includes for each compartment, a compartment identifier 138i that is replicated on the compartment as a visual identifier for the user, a compartment status table 140i including a level of the remaining energy for the compartment, a status of the lock (locked/unlocked), a status of the door (opened/closed), whether the compartment is damaged or operational, or whether the compartment is clean or dirtied, and a compartment size 142i, and a compartment broadcasting table 144i comprising a repetition time period parameter, a listening time window parameter and a power emission parameter, which correspond to optimized parameters for the compartment to broadcast short messages towards mobile devices.

The database system 130 also stores credentials of the parcel lockers users and information for communicating with them such as phone numbers and email addresses. In particular, the database system 130 stores for each parcel recipient a unique authorization code 150i, which is generated by the remote shipping system for each parcel deposited in a compartment and which may be required for the parcel recipient to pick-up his parcel. This unique authorization code 150i is associated with the recipient credentials and uniquely associated with the parcel identification 136i of the corresponding parcel.

The mobile device 102 can be a smartphone or personal digital assistant (PDA) or any computerized mobile device having some short distance communication capabilities compatible with the short distance communication capabilities of the locking modules and having some long distance communication capabilities compatible with the long distance communication capabilities of the remote shipping system 106. According to the invention, the mobile devices are used as user interfaces for operating the compartments of the parcel locker, replacing the central user interfaces of prior art parcels lockers, which therefore are not required on the parcel locker of the invention. In particular, an authorization code for accessing a compartment by a parcel recipient can be communicated to the locking module via the mobile device of the recipient, and therefore is not required to be entered via a user interface like on the prior art parcel lockers. More generally, the mobile devices are used as a channel for communication between the remote shipping system and the compartments of the parcel lockers allowing the establishment of an asynchronous bidirectional multi-channel communication. As a result, the remote shipping server may for example transfer via any mobile device an instruction for blocking the operation of a compartment or a compartment may transfer via any mobile device information such as events regarding operations within the compartment to the remote shipping system.

Different categories of users can interact with the compartments of the parcel locker via their mobile device including parcel recipients or site owners or carrier agents, who typically may use a PDA. Preferably, the mobile devices shall be smartphones, in particular in the case of the parcel recipients, so that they can use their personal smartphones. A mobile parcel locker application (MPL application) for operating locally the parcel locker compartments may be installed on the mobile devices and preferably may be downloaded from a remote server, for example via an application store. This MPL application includes sub-programs for installing or servicing the parcel locker, typically for site owners, or for delivering parcels, typically for carrier agents, or for picking-up parcels or for receiving notifications, typically for the parcel recipients. Preferably, the MPL application is instantiated according to the user category. In the case of a carrier agent PDA, the MPL application may be integrated in the carrier agent software module installed on his PDA for delivering parcels.

The usage of autonomous compartments provides easiness and flexibility, in particular as it avoids the need for any electrical wiring around the compartments or for any electrical power connection. However, there is a major requirement for minimizing the power consumption of each compartment, and therefore there is the need for the locking modules for minimizing communication and data exchanges, which are significant source of energy consumption. One way for minimizing the power consumption is to implement some low energy or sleep modes for the operation of the locking modules. In parallel, there is a need for optimizing usability of the parcel locker including in particular ensuring that the user does not have to carry out any specific action for waking-up a locking module such as touching a button on the parcel locker, or ensuring that the user does not have to wait for too long a time in front of the parcel locker for example due to long data exchanges, or ensuring that data stored in a compartment can be easily updated. All these aspects are addressed by the invention as described below.

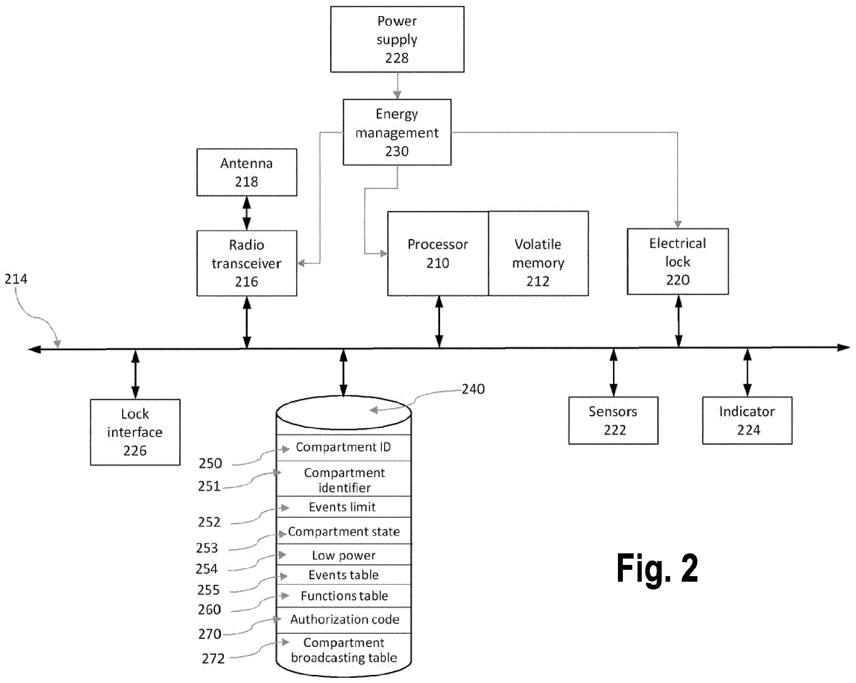

Figure 2 illustrates a locking module 116i comprising a processor 210 and associated volatile memory 212 controlling the major components of the locking module via a bus 214. The short distance wireless communication is carried out by a radio transceiver 216 equipped with an antenna 218. The door fastening is performed by an electrical lock 220 directly controlled by the processor 210. Sensors 222 may be provided for establishing the status of the electrical lock (locked/unlocked) or the status of the door (opened/closed) or whether the compartment is empty or full. A visual indicator 224, such as light emitting diode (LED), may be attached to the locking module and controlled by the processor, for example for indicating which compartment should be used for depositing or for picking-up a parcel. Preferably, when a door is unlocked, the door automatically opens, thanks for example to a spring mechanism, and therefore indicates which compartment should be used without any need for a visual indicator. Although the system is designed to be operated with a mobile device such as a smartphone by a parcel recipient, a lock interface 226, such as a pin-pad or another interface known in the art, is also provided for a parcel recipient who does not possess a mobile device, so that he can access a compartment by entering his authorization code with the lock interface. A compartment identifier such as a number may be attached on a visible part of each compartment, for example on the door, so that a user may identify a particular compartment. Thus, a recipient who does not possess a mobile device, may identify a compartment in which he needs to pick-up a parcel.

The locking module is powered by a power supply 228, which may be replaceable batteries or rechargeable batteries via solar panels or energy harvesting equipment or any other electrical energy supplies. In order to minimize the power consumption, an energy management module 230 manages transitions of energy modes and allows the compartment 110i to be run in low energy or sleep modes. Each energy mode defines which peripheral or component is available and limits the amount of current consumed by the peripherals or components. For example, the energy management module may turn off the power of unused blocks of the volatile memory 212. A non-volatile memory 240 controlled and directly accessible by the processor stores the firmware run by the processor 210 and data received from the remote shipping server via mobile devices or generated within the compartment 110i such as operation events. The data stored in the non-volatile memory 240 comprise a compartment identification 250, which uniquely identifies the compartment, a compartment identifier 251, an events limit 252 indicating a limit of events that can be stored in the locking module, a compartment state 253, a low power status 254 indicating the status of the power supply, and an events table 255 storing the events which have occurred relatively to the operation of the compartment. Typical events, which may be stored in the events table, include change in the status of the door and new status (opened/closed) or change in the status of the lock and new status (locked/unlocked) or whether the compartment is dirtied or damaged or whether a parcel is deposited in the compartment. The events are temporarily stored in the compartment before transfer to the remote shipping system via a mobile device for the remote shipping system to monitor and manage the park of compartments and parcel lockers. In order to minimize the used memory of the locking module, once an event is successfully transferred to the remote shipping system, it is deleted from the events table 255 and the events limit 252 is updated if necessary. The non-volatile memory 240 also stores a functions table 260 corresponding to all the functions, which are available for the compartment operation and which can be run by the processor 210 on request by an authorized mobile device, and may store a unique authorization code 270, which may be requested from a recipient for his picking up of a parcel in the compartment, and may store a compartment broadcasting table 272.

In order to communicate with a locking module 116i via short distance wireless communication, a mobile device 102 also comprises a radio transceiver equipped with an antenna controlled by a processor running an associated short distance wireless communication software. In particular, it comprises a scanning function for discovering the different compartments that it may have to communicate with. Such hardware and software components are commonly available for smartphones or PDAs.

When a compartment is not in use, the locking module is in a sleep mode, i.e. a low energy mode so as to minimize the power consumption of the compartment. In sleep mode, the energy level of the compartment is below 10% of the average energy consumption when the compartment is awake. In such a sleep mode, the locking module cannot be wakened up by a mobile device proximate to the compartment and the mobile device cannot establish a communication with the compartment. In order to allow for establishing a communication session, when in sleep mode, the locking module temporarily wakes-up for broadcasting short messages with a repetition time period and actively listens to responses from mobile devices during a limited listening time window. A mobile device proximate to the compartment and whose short distance communication is activated, has a scanning function listening to broadcasted short messages from locking modules. When the mobile device captures a broadcasted short message from a locking module, and if the mobile device needs to establish a communication with this locking module, the mobile device immediately sends a response message to the locking module for establishing the communication so that the response message can be captured within the limited listening time window of the locking module. When the respond message is captured and validated by the locking module, the energy management 230 is instructed to maintain the locking module in an awake mode and the communication can be established. The mobile device then behaves as a client initiating requests and commands, and accepting responses from the locking modules. The locking module behaves as a server receiving requests and commands, and performing requested actions and returning responses. For improving the efficiency of the broadcasted short messages and the capture rate of the response messages, several wavelength channels may be used for exchanges between a mobile device and a locking module. Using several channels is particularly useful when some channels happen to interfere with some other local emissions or even to be blocked by the environment.

In order to minimize the power consumption of the locking module, the listening time window must be minimized, and the repetition time period must be maximized. However, these adjustments are limited by the need for establishing a communication session quickly enough for not impacting the user experience, therefore requiring a long enough listening time window and a short enough repetition time period. In parallel, in order to minimize the power consumption, the power emission of the radio transceiver 216 and antenna 218 of the locking module also may be minimized as well as the number of wavelength channels as the energy consumption increases with the number of channels. However, the power emission of the locking module and/or the number of channels must be sufficient, depending on the environment conditions, for a mobile device to capture broadcasted short messages from the locking module and to establish a communication session within at least ten (10) meters from a parcel locker.

In addition, the parcel locker system needs to ensure that broadcasted short messages coming from a multiplicity of locking modules can be captured in parallel by a mobile device and that communication sessions can be established in parallel by several mobile devices. Optimization of a broadcasting configuration (repetition time period, listening time window, number of channels, power emission) has been carried out in the case of Bluetooth short distance communication. For a standard parcel locker configuration with 20 compartments, the optimized broadcasting configuration corresponds to a repetition time period of 250ms within a range +/- 100ms, a listening time window of 10ms within a range +20ms/-0ms, a number of channels of two (3) or three (3), preferably three (3) within a wavelength range: 2402-2480MHz, and a power emission of 0dBm within a range +4dBm/-0dBm.

The optimized broadcasting configuration depends on the compartment configuration of a parcel locker. Therefore, a broadcasting configuration is attached to each parcel locker configuration and is stored in the database system 130 of the remote shipping server. Based on a parcel locker configuration, a compartment broadcasting table 142i is defined and stored in the database system 130 for each compartment of the parcel locker. Each compartment broadcasting table may be regularly communicated to the corresponding compartment to ensure for an optimized broadcasting setting depending on the evolving configuration and environment, and stored in the compartment broadcasting table 272 in the non-volatile memory of the locking module. For example, each time a carrier agent mobile device establishes a connection with a compartment, and if the compartment broadcasting table 272 needs to be updated for that compartment, the compartment broadcasting table 142i is communicated by the remote shipping server to the mobile device as part of the parcel locker configuration, and the mobile device communicates the compartment broadcasting table to the locking module of the compartment for update. For complex parcel locker configurations or more difficult environment, each compartment broadcasting table may have to be set specifically. For simpler situations, all compartment broadcasting tables of the same parcel locker may be identical. Preferably, a MPL application provides access for carrier agents or site owners to a wizard sub-program for adjusting the broadcasting parameters and setting them so that they may also be communicated to the remote shipping server.

A broadcasted short message emitted by a compartment and captured by a mobile device comprises a unique compartment identification 250, which is used by the mobile device for identifying the compartment, and which is then integrated in the response message to the locking module of the compartment for establishing a communication session. In order to further minimize the power consumption of locking modules, the broadcasted short message also comprises some status information relative to the compartment so that based on this status information further actions or communication may be avoided or may be minimized. The locking module firmware run on the processor 210 is configured for preparing a broadcasted short message, which comprises the following status information:
- the events limit 252 indicating that the limit of events stored in the non-volatile memory 240 has been reached - meaning typically that the limit of the memory space allocated for events in the non-volatile memory 240 has been reached, and therefore a parcel deposit, for example, should not be initiated with the particular compartment until some of the events may have been cleared, i.e. typically successfully transferred to the remote shipping server,
- the compartment state 253 defining in particular whether the compartment is empty or full, and therefore indicating whether a parcel can be deposited or not in the compartment,
- the low power status 254 so that no specific connection or request is required to obtain the low power status.

The status information is provided to the mobile device for preventing the mobile device initiating some actions, which may compromise the operation of the compartment or may not be completed. For example, if a low power status has been reached, interacting with the compartment before the power supply has been replenished may completely drain the power supply resulting in an uncompleted action and a compromised compartment condition. Preferably, in order to minimize the size of the status information, the events limit and the low power status are both single bits. The compartment state is a concatenation of bits, each bit corresponding to Boolean states such as empty/full compartment or opened/closed door or locked/unlocked compartment.

When a mobile device receives a broadcasted short message from a particular compartment, the mobile device may need to establish a communication session with that particular compartment for example to transfer to the remote shipping system events stored in the compartment or to deposit a parcel into the compartment or to pick-up a parcel from the compartment. To prevent any communication and eventually any access to the compartment from an unauthorized device, an authenticator, preferably unique, must be provided as part of a request from the mobile device for establishing a communication session, and this authenticator is checked by the locking module of the compartment for authorizing the establishment of a communication session.

The authenticator includes or is sent with the unique compartment identification, which is checked by the locking module for ensuring that the request is addressed to the appropriate compartment. The request from the mobile device for establishing a communication session may be received by other compartments, but will be rejected as there is no match on the compartment identification. Once a communication session is authorized by the compartment with the mobile device, any request from any other mobile device is rejected. During the communication session, any request from the mobile device to the compartment may need to include the authenticator. The authenticator is generated by the remote shipping system and is provided to the mobile device by the remote shipping system.

The authenticator also includes a privileges mask, which identifies, amongst all available functions within the functions table 260, the functions that are authorized. The generation of a privileges mask by the remote shipping system depends on the user and in particular on the user category. The remote shipping system then provides the privileges mask to the mobile device within the authenticator. The privileges mask, as well as the authenticator, is generated by the remote shipping system following on a login of the user into the MPL application, which is installed on his mobile device for interacting with the parcel locker compartments, and which automatically requests an authenticator from the remote shipping system. Following on the establishment of a communication session, the privileges mask received by the compartment is used for the compartment to provide access to the functions, which are authorized for the particular user. The privileges mask may be stored in volatile memory and addressed by the firmware run by the locking module for checking on the functions authorized for the particular user. In order to minimize the size of the privileges mask and therefore participate in minimizing the data volume exchanged with the locking module, the privileges mask consists in a series of bits, preferably a 32 or 64 bit series, where each bit corresponds to a particular function of the functions table 260. The bit value indicates whether the function is authorized or not authorized. For example, a bit set at 1 may indicate that the function is authorized and a bit set at 0 may indicate that the function is not authorized. Such a format for the privileges mask allows for a compression of information and for a convenient inclusion of the privileges mask into the authenticator, which prevents the need for additional communication between the compartment and the mobile device to define the authorized functions. For prior art parcel lockers, which are operated by different categories of users requiring access to different functions of the parcel lockers, roles are typically pre-defined and stored in the parcel lockers. A particular role is attached to each user, and when a user establishes a communication or an access with a parcel locker, the role attached to the user is provided to the parcel locker. As a result, when some function access must be changed and therefore the corresponding roles must be changed, these roles need to be updated and stored in all the parcel lockers before any new communication can be established between users and the parcel lockers. Roles updates can be performed by downloads from remote servers via long distance communication. But when no long distance communication is available as addressed by the invention, the usage of a privileges mask is a major benefit because no roles update is then required for the locking modules. Additionally, the usage of a privileges mask in the form of a series of bits makes the locking module operation particularly efficient as no interpretation of string requests is required from the locking module, which would typically be the case for example if a role attached to a user is provided to a compartment when the user initiates a communication or access with the compartment.

As opposed to prior art parcel lockers, which include a central control unit monitoring and storing the status of the different compartments of the parcel locker and which controls the different compartments, a parcel locker of the invention constituted of autonomous compartments does not include any central control unit. In the parcel locker system of the invention, the monitoring and the storing of the status of the compartments is performed by the remote shipping server, which delegates the local control of the compartments to the MPL application. When a parcel deposit into a parcel locker of the invention is initiated by a carrier agent, the PL configuration is provided by the shipping remote server to the carrier agent MPL application. The PL configuration includes all compartment identifications and corresponding parcel identifications of parcels deposited in the compartments of the parcel locker. The PL configuration is essential for a user to be able to operate the parcel locker via his mobile device, for example, for a carrier agent to be able to select in which compartment a parcel can be deposited. Preferably, the PL configuration is requested by the MPL application to the remote shipping server following on the reception by the mobile device of a first broadcasted short message from a compartment.

Based on the unique compartment identification 250 comprised in the broadcasted short message and transferred to the remote shipping server within the PL configuration request, the remote shipping server identifies within its database system 130 the corresponding parcel locker and provides the PL configuration to the mobile device. Once the PL configuration is received by the mobile device, a compartment available for deposit can be identified by the MPL application and a communication session can be established by the mobile device with that compartment for the deposit of a parcel. The compartment availability is established based on the compartment status 138i included in the PL configuration provided by the remote shipping server as whether a parcel identification is associated with the compartment identification. Based on the events limit 252 received from a compartment with a broadcasted short message, the MPL application establishes that a PL configuration update may be required. In an alternative embodiment, the PL configuration is received from the remote shipping server before the carrier agent arrives near the parcel locker and the parcel deposit can start before broadcasted short messages are received by the mobile device from all the compartments of the parcel locker, therefore minimizing delays for the carrier agent.

Based on the PL configuration, the MPL application also can establish the number of compartments, which constitute the parcel locker, and can check that a broadcasted short message is received from all the compartments of the parcel locker. The efficiency of parcels deposit by a carrier agent depends on the accuracy of the PL configuration provided by the remote shipping server. It is therefore important that events relative to the compartments of a parcel locker be transferred as soon as possible to the remote shipping server. Preferably, events are transferred as part of any user operation on the parcel locker via the mobile device of the user. However, some parcel recipients may pick-up their parcel without using a mobile device or some operations may not allow for the transfer of events from some compartments to a mobile device. So, any event relative to a compartment, either during a user operation such as a deposit or during a compartment internal operation such as a low power status, is stored in the events table 255 so that it may be transferred to the remote shipping server via any mobile device performing an events upload towards the remote shipping server.

An aspect of the invention is that the parcel locker system of the invention allows for the establishment of an asynchronous bidirectional multi-channel communication between the remote shipping server and the compartments of the park of parcel lockers, where the multiple mobile devices constitute a multi-channel network. As described above, an asynchronous communication is established in the direction of the remote shipping server from a compartment via a mobile device following on the establishment of a communication session between the mobile device and the compartment, for example to transfer data such as events from the compartment to the remote shipping server. The mobile device temporarily stores the data until their transfer to the remote shipping server can be completed. This transfer can be performed via any mobile device with an installed and activated MPL application for operating parcel lockers so that the data may be uploaded via the first mobile device, which establishes a communication with the compartment. In the other direction, the remote shipping server communicates to a compartment via a mobile device either data such as authorization codes or instructions such as for blocking the operation of a compartment. The data or requests are temporarily stored in the mobile device until their transfer to the compartment can be completed. This asynchronous communication can be carried out via any mobile device with an installed and activated MPL application.

Preferably, the remote shipping server selects some preferred mobile devices for communicating with a compartment according to preset rules. A preset rule may be that a communication from the remote shipping server to a particular compartment is addressed only to mobile devices, which are making requests to the remote shipping system regarding the particular compartment such as for a coming up deposit of parcels. Such a rule ensures that communications from the remote shipping server are channeled only through mobile devices, which are most likely to establish a communication with the particular compartment. The bidirectional communication may be established based on web socket technology. According to the invention, the mobile devices with an installed MPL application for operating the parcel lockers constitute a multichannel asynchronous network for communicating between the remote shipping system and a compartment, therefore optimizing the efficiency of the communication while the invention also allows for parcel lockers to be operated in areas not covered by long distance wireless communication. Data or requests from the remote shipping system may be communicated to and temporarily stored in a mobile device before entering the area not covered by long distance wireless communication, and data from compartments may be temporarily stored in a mobile device until the mobile device exits the area not covered by long distance wireless communication to complete the transfer to the remote shipping system.

The system is designed to be operated by a parcel recipient either with a mobile device such as a smartphone or without a mobile device as some parcel recipients may not possess or may not want to use a mobile device for operating a compartment. A parcel recipient may also possess a mobile device, which does not carry a short distance wireless communication capability, or may not want to activate it. It is therefore important that the parcel locker system of the invention can be operated by a parcel recipient both remotely with a mobile device and manually for example with a lock interface such as a pin-pad for entering a unique authorization code. Operating the parcel locker with the mobile device provides a superior user experience as entering an authorization code is not required. In this case, access authorization by a compartment is given by checking the authenticator automatically provided by the recipient mobile device and initially generated by the remote shipping system. For security reason, the authorization code provided to the recipient for picking-up a parcel is preferably a one-time authorization code, uniquely associated with the particular parcel to be picked-up, so that this one-time authorization code cannot be used again. One-time authorization codes are generated and managed by the remote shipping system. For each parcel to be picked-up from a compartment, a one-time authorization code needs to be provided to that compartment before the recipient comes for picking-up his parcel. In an embodiment, the authorization code is requested by the carrier agent MPL application at the time of the parcel delivery by a carrier agent after the parcel for deposit has been identified, for example by scanning a parcel identification attached onto the parcel. Alternatively, in another embodiment, the authorization code is generated beforehand by the remote shipping server and communicated to the MPL application for temporary storage before or when the carrier agent plans for his daily delivery into parcel lockers. Therefore, the carrier agent can operate the parcel locker even if he stands in an area not covered by long distance wireless communication.

Upon receiving the request, the remote shipping system generates the authorization code, which is temporarily duplicated into the mobile device. Once the parcel is deposited, the authorization code is transferred from the mobile device to the compartment and the remote shipping server is informed of the deposit via the upload of the compartment events. Then, the remote shipping server notifies the recipient for example via a SMS or an email that he has to pick-up a parcel. If the recipient does not have a MPL application installed, the notification provides the recipient with the parcel locker location and with the compartment identifier and with the authorization code that he needs to enter for opening the compartment. If the recipient has installed the MPL application, the notification only informs the recipient of the parcel locker location and reminds him that he should use the MPL application for opening the compartment.

More generally, the benefit of operating a parcel locker with a mobile device also applies to any user including site owners or carrier agents. Access authorization by a compartment is given by checking the authenticator automatically provided by the user mobile device and initially generated by the remote shipping system, thus replacing a manual authorization entry for example via a keypad or via a barcode scanning.

In addition to responding to the needs for a new generation of parcel lockers as described previously, the autonomous compartments of the invention provide additional benefits. If a compartment locking module malfunctions, and in particular cannot communicate anymore, all the other compartments can continue to be operated and can communicate, unlike with prior art parcel lockers where a malfunctioning central control unit would block the operation of all the compartments and would require immediate intervention. For the parcel locker of the invention, a simple swap of the malfunctioning compartment could be performed at the most appropriate time. Another user benefit of the invention is that each user operates the compartments of the invention with his own mobile device therefore allowing several users to access several compartments in parallel. During busy periods, several recipients may pick-up their parcels in parallel based on the compartment identifiers or even carrier agents and recipients may interact in parallel with the parcel locker compartments. Such parallel operations are made possible by the system architecture of the invention providing locking modules, which broadcast short messages, which store operation events and which update the PL configuration information of mobile devices and of the remote shipping system.

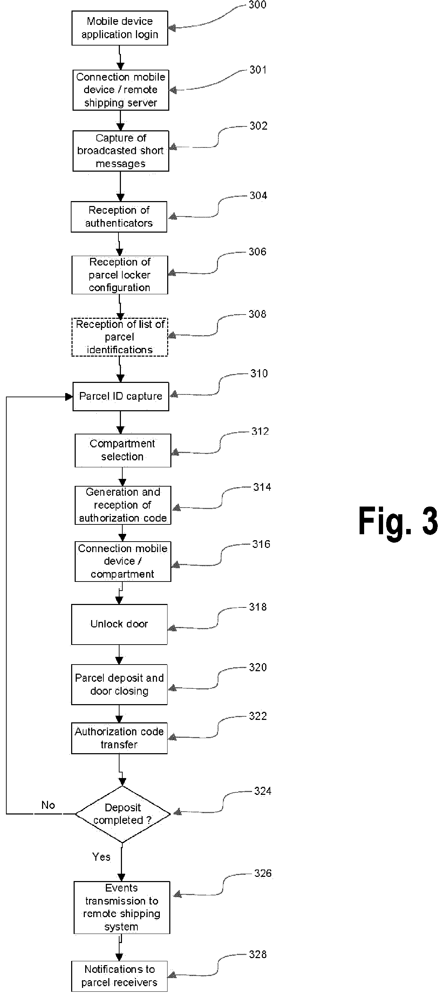

Figure 3 illustrates an embodiment of the invention for parcel deposit by a carrier agent. When a group of parcels is planned to be deposited in a particular parcel locker 100, the deposit task is assigned to a carrier agent. To carry out the deposit, the carrier agent uses a mobile device 102 and has to access a MPL application for operating parcel lockers. Preferably, the carrier agent must perform a login for accessing the MPL application (step 300). The login can be performed via any means known in the art such as an identifier entry via the mobile device interface (for example by keying the identifier on the keypad or touchscreen of the mobile device), an identification barcode reading by the mobile device or an identification capture by the mobile device via imaging or biometry technology or radio frequency technology. Alternatively, as part of a single sign on scheme, the login for accessing the MPL application may be combined with the login of a general carrier software running on the mobile device for managing the overall activity of the carrier agent, for example when the MPL application is integrated in such a general carrier software. The login for accessing the MPL application may also be combined with the login of the mobile device, for example when the mobile device is dedicated for a carrier agent activity. Following on the carrier agent login, in step 301, the MPL application initiates a communication with a remote shipping server 106 and provides the user credentials. The MPL application may also automatically activate the short distance communication in anticipation for establishing a communication with parcel locker compartments. After a positive check on the carrier agent credentials, the remote shipping server authorizes the communication and a secured communication is established between the mobile device and the remote shipping server.

When the carrier agent arrives near the parcel locker, the mobile device starts capturing broadcasted short messages from compartments of the parcel locker (step 302). After a first capture of a broadcasted short message, which includes a unique compartment identification 250, the MPL application requests from the remote shipping system data for performing the deposit including in particular authenticators for establishing the communication with compartments. Based on the unique compartment identification 250, the remote shipping system can identify the corresponding parcel locker for returning the appropriate data and a check may be performed on whether the carrier agent is in front of the appropriate parcel locker. The remote shipping system generates a preferably unique authenticator for each compartment of the parcel locker and provides these authenticators to the MPL application so that the mobile phone may establish a communication with each compartment. Each authenticator includes or is sent with a unique compartment identification 134i, which is retrieved from the PL configuration stored in a database system 130 of the remote shipping system, and also includes a privileges mask, which is generated by remote shipping system based on the user credentials and on the user category (step 304). Based on the unique compartment identification 250, the remote shipping system also provides the mobile device with the PL configuration, which comprises for each compartment a compartment identification and a status table and a compartment size (step 306). In parallel, the remote shipping server may have requested or may have received from the carrier system an announcement regarding the parcels, which should be deposited in that parcel locker. Based on this announcement, the remote shipping system may also provide a list of identifications corresponding to the parcels to be deposited in the parcel locker (step 308). In an alternative embodiment, authenticators and PL configuration may be provided to the MPL application before the carrier agent arrives near the parcel locker, for example in the case of computerized planned deliveries, so that no transmission delay may impact the delivery process in front of the parcel locker. When receiving a first broadcasted short message, the MPL application may check for a match between the unique compartment identification 250 comprised in the broadcasted short message and the compartment identification 134i of a PL configuration received from the remote shipping system, where it is stored in the database system 130.

In step 310, the carrier agent captures a parcel identification attached to a parcel to be deposited in the parcel locker 100 with his mobile device 102, for example by scanning the parcel identification barcode printed on the parcel or by reading a radio frequency signal emitted by a tag affixed onto the parcel via for example RFID technology or NFC technology or eventually by entering manually the parcel identification. The size of the parcel may be captured at the same time as the parcel identification or may need to be entered separately. Following on the successful capture by the mobile device 102 of the parcel identification, the mobile device 102 may check for a match between the parcel identification captured by the mobile device 102 and the list of identifications of the parcels to be deposited, therefore ensuring that the parcel is actually required to be deposited in the parcel locker. In step 312, based on the PL configuration, the MPL application selects in which compartment the parcel can be deposited, according to preset rules including at least the following: the compartment is empty and the comportment size matches the parcel size. Other rules for selecting a compartment for deposit may include a rotation rule amongst the compartments for ensuring a homogeneous usage of the compartments in order to apportion the power consumption or to prevent the early wear of any particular compartment. The rotation may be planned by the remote shipping server based on the level of the remaining energy for the different compartments of a parcel locker - level of the remaining energy, which may be communicated by each compartment via the mobile devices. Following on the compartment selection, the MPL application requests from the remote shipping server a unique authorization code, which will be uniquely associated with the parcel and the compartment. The authorization code is generated by the remote shipping server and communicated to the MPL application for temporary storage (step 314). Alternatively, authorization codes for all the parcels to be deposited in the parcel locker are generated beforehand by the remote shipping server and communicated to the MPL application for temporary storage before or when the carrier agent plans for his daily delivery into parcel lockers. Eventually, authorization codes can be generated immediately after a recipient registers for a parcel shipment and a unique parcel identification is associated with that parcel. Therefore, the carrier agent arrives near the parcel locker with the authorization codes already stored in his mobile device, and he can operate the parcel locker even if he stands in an area not covered by long distance wireless communication.

As soon as the mobile device receives a broadcasted short message from the selected compartment (identified by the unique compartment identification 250 included in the broadcasted short message), the mobile device sends a response message to the compartment for establishing a communication so that the response message can be captured within the limited listening time window of the locking module. The response message includes the authenticator provided by the remote shipping server and associated with the compartment. As part of the communication establishment, an authentication is performed according to the short distance wireless protocol and the energy management 236 is instructed to maintain the locking module in an awake mode. As part of the authorization process for the locking module to authorize the mobile device to establish the communication, the locking module verifies the validity of the received authenticator and checks on the unique compartment identification included in or sent with the authenticator by comparing this unique compartment identification with the compartment identification 250 stored in the non-volatile memory 240 (step 316). Once the communication between the locking module and the mobile device is established, the locking module stops broadcasting short messages, but the mobile device continues listening to other compartments and may capture broadcasted short messages including some compartment status information, which had not been captured yet. Thereby, the mobile device may in parallel update its information regarding the PL configuration, eventually by initiating some requests for events stored in some compartments.

In step 318, the mobile device sends a request for the compartment to unlock his door and which includes the authenticator. After validating the requested unlocking action based on the privileges mask included in the authenticator, the locking module unlocks the compartment door. The locking module may activate a visual indicator such as a LED for indicating which door should be opened for depositing the parcel, in case no mechanism is comprised with the door for an automatic opening. In step 320, the carrier agent deposits the parcel in the compartment and closes the door - event which is detected by a sensor 222 and stored in an events table 255 of the compartment locking module. Preferably, the carrier agent is required to confirm the deposit before the mobile device requests the compartment to lock the door, therefore ensuring that the parcel deposit has actually occurred. Alternatively, the mobile device automatically requests the compartment to lock the door or the compartment automatically locks the door. After validating the requested action based on the privileges mask included in the authenticator, the locking module locks the compartment door. Then, in step 322, the mobile device requests for the transfer of the unique authorization code uniquely associated with the parcel and which was generated by the remote shipping server. After validating the requested transfer action based on the privileges mask included in the authenticator, the locking module stores the unique authorization code 270 in the non-volatile memory 240, and the communication between the mobile and the compartment is disconnected and the compartment locking module resumes broadcasting short messages. As long as some parcels remain for deposit, the carrier agent proceeds with step 310 (capture of a parcel identification) and proceeds with the following steps up to step 322 (step 324). Based on the list of identifications of the parcels to be deposited in the parcel locker, the MPL application may define whether the deposit process is completed by comparing the parcel identifications, which have been captured in step 310, with the list of identifications of parcels for deposit.

In a preferred embodiment, immediately following on an event occurring within a compartment, the locking module of the compartment stores the event in an events table 255. During the deposit process, other requests may be sent by the mobile device to the compartments such as the transfer of events stored in the compartments. Preferably, the transfer of the events stored in the compartments is performed during the deposit process in order to avoid or minimize any waiting time for the carrier agent at the end of the deposit for transferring the events from the compartments to the mobile device, and avoid an early departure of the carrier agent before the transfer of events is completed. Once the deposit process is completed or the carrier agent has indicated via the interface of the mobile device 102 that he wanted to stop the deposit process, the communication between the mobile device and the latest compartment is disconnected. As soon as the communication between the mobile device 102 and the remote shipping system 106 is established, if this communication was disconnected, the mobile device transmits to the remote shipping system the events collected from the compartments (step 326). Once the events are received by the remote shipping system, the remote shipping system generates a notification for each recipient of parcel, which has been deposited in the parcel locker, informing him of the deposit and providing him with information for picking-up the parcel (step 328). The recipient authorization codes may be provided only to the recipients who have not downloaded the MPL application as the recipients having downloaded the MPL application can use their mobile device for picking-up their parcel. During the whole deposit process, the mobile device screen may serve as man machine interface for informing and guiding the carrier agent for operating the compartments, for example in case all compartments are utilized and no more deposit is possible.

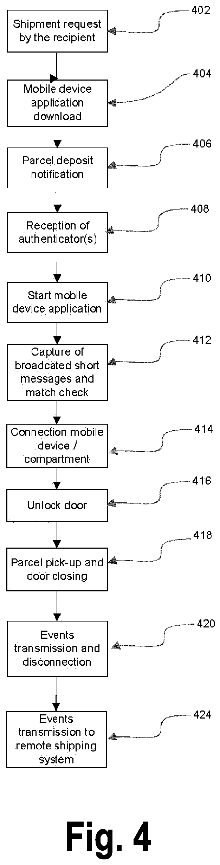

Figure 4 illustrates an embodiment of the invention for parcel pick-up by a recipient using his mobile device for operating a compartment. When a recipient makes a request for a shipment, typically via a computer system, this request is logged into a remote shipping system 106 (step 402). When the recipient chooses that the shipment be delivered in a parcel locker 100, the remote shipping system may inform the recipient that a MPL application should be downloaded onto his recipient mobile device 102 in case such a MPL application has not been downloaded yet onto his mobile device. If agreed by the recipient, the remote shipping system then may download the MPL application onto the recipient mobile device or for many standard operating systems for mobile devices, the recipient may be requested and guided to use an associated application store, for example apps store^{™} or Google play^{™}, for downloading the MPL application onto his mobile device (step 404).

After the shipment, i.e. the parcel, is deposited in a compartment 110i of the parcel locker, the remote shipping system sends at least one notification to the recipient in the form of an email or an SMS for informing the recipient of the parcel deposit and of the location of the parcel locker and including the parcel identification (step 406). If the recipient has not downloaded the MPL application, the notification comprises an authorization code that the recipient needs to enter for opening the compartment and a compartment identifier corresponding to a physical identifier attached on a visible part of the compartment so that the recipient may identify the compartment where his parcel is deposited. The notification may also propose the download of the MPL application for example via a Uniform Resource Locator (URL). If the recipient has installed the MPL application, the notification only reminds him that he should use the MPL application for opening the compartment. In step 408, in a preferred embodiment, the reception by the MPL application of an authenticator for the parcel pick-up is initiated during the notification process. The notification received on the mobile device may include a function, for example a URL eventually in the form of a button, designed for transferring the authenticator to the MPL application. When the recipient activates the function, for example by touching the area of the mobile phone display representing the function, a navigator installed on the mobile phone is launched for accessing a web application hosted on the remote shipping server and a parcel identification associated with the notification is sent to the web application. The web application remotely starts the MPL application, which requests from the remote shipping system an authenticator for the pick-up of the parcel. Based on the parcel identification, the remote shipping system can identify the corresponding parcel locker and parcel compartment for generating a preferably unique authenticator, which is uniquely associated with the compartment where the parcel is deposited and which can be used by the mobile phone for establishing a communication with the compartment. This particular notification procedure with the function pointing to the web application allows for a separation of the management of the recipients, for example handled by the carrier organization, and the management of the parcel lockers, for example handle by a service company, which may not know specifically about the recipients. The generated authenticator includes or is sent with a unique compartment identification 134i, which is retrieved from the PL configuration stored in a database system 130 of the remote shipping system, and also includes a privileges mask, which is generated by the remote shipping system based on the user credentials and on the category of the user, who is identified as a recipient. The remote shipping system returns the authenticator to the PML application, where it is stored for a future pick-up of the parcel. In case several parcels are due to be picked-up by the recipient, the remote shipping system generates and returns for each parcel an authenticator including or sent with a unique compartment identification. Alternatively, for an integrated system, data including the authenticator are encapsulated within the function, preferably in an encrypted form, and, when the recipient activates the function, the data are transferred to the MPL application. In this case, the authenticator and the privileges mask are generated beforehand by the remote shipping system where recipient data and parcel locker data are jointly managed in an integrated manner.

When the recipient arrives near the parcel locker, he starts the MPL application on his mobile device 102, and, if the short distance communication is not activated yet, it is automatically turned on (step 410). In case an authenticator has not been received by the mobile phone for the pick-up of the parcel, the MPL application may provide the recipient's credentials, preferably his mobile device phone number, to the remote shipping system and may request an authenticator for establishing communication with a locking module 116i of the compartment where his parcel has been deposited. Based on the recipient's credentials, the remote shipping system can identify the corresponding parcel and parcel locker for generating and returning a preferably unique authenticator, which is uniquely associated with the compartment and which can be used by the mobile phone for establishing a communication with the compartment. The authenticator includes or is sent with a unique compartment identification 134i, which is retrieved from the PL configuration stored in a database system 130 of the remote shipping system, and also includes a privileges mask, which is generated by the remote shipping system based on the user credentials and on the user category.

In step 412, the mobile device starts capturing broadcasted short messages from compartments of the parcel locker. Each broadcasted short message includes a unique compartment identification 250 identifying the corresponding compartment. For each received broadcasted short message, the MPL application checks for a match between the unique compartment identification 134i received from the remote shipping system (or at least one of the unique compartment identifications, if several parcels are due to be picked-up by the recipient) and the unique compartment identification 250 received from the compartment for identifying which compartment contains the recipient's parcel. As soon as the mobile device obtains a match for a particular compartment, the mobile device sends a response message to the compartment for establishing a communication so that the response message can be captured within the limited listening time window of the locking module. The response includes the authenticator provided by the remote shipping server and corresponding to the compartment. An authentication is performed according to the short distance wireless protocol and the energy management 230 is instructed to maintain the locking module in an awake mode. As part of the authorization process for the locking module to authorize the mobile device to establish the communication, the locking module verifies the validity of the received authenticator and checks on the unique compartment identification included in or sent with the authenticator (step 414). Once the communication between the locking module and the mobile device is established, the locking module stops broadcasting short messages.

In step 416, the mobile device sends a request for the compartment to unlock his door, request which includes the authenticator. After validating the requested action based on the privileges mask included in the authenticator, the locking module unlocks the compartment door. The locking module may activate a visual indicator such as an LED for indicating which door should be opened for depositing the parcel, in case no mechanism is comprised with the door for an automatic opening. In step 418, the recipient retrieves his parcel from the compartment and closes the door - event which is detected by a sensor 222 and stored in an events table 255 of the compartment locking module - and the locking module locks the door of the compartment. During the pick-up process, the locking module of the compartment stores an event in an events table 255 preferably immediately following on the occurrence of the event within a compartment. Following on the confirmation to the mobile device by the locking module of the door locking, the mobile device requests events stored in the non-volatile memory 240 of the locking module for transferring them to the remote shipping server. In order to secure the transfer of information via an untrusted mobile device, the locking module may encrypt the events before transferring them to the mobile device. After the transfer of the events, the communication between the mobile and the compartment is disconnected and the compartment locking module resumes broadcasting short messages (step 420). As soon as the communication between the mobile device 102 and the remote shipping system 106 is established in case this communication was disconnected, the mobile device transmits to the remote shipping system the events collected from the compartment (step 424). If the recipient has to pick-up other parcels corresponding to other authenticators temporarily stored by the MPL application, the mobile application returns to step 412 and resumes listening to broadcasted short messages. The following steps take place if an additional parcel is deposited for the recipient in this particular parcel locker. During the pick-up process, the mobile device screen may serve as man machine interface for informing and guiding the recipient for operating the compartments. In particular, the MPL application may be configured for indicating the parcels which are due to be picked-up by the recipient including the location and the compartment identifier.

In a particular embodiment of the invention, a mobile device may be provided locally next to a parcel locker. This local mobile device may be used by all users for operating the parcel locker. It may in particular be used by parcel recipients without any smartphone or any carrier agent having a dis-functional mobile device. The local mobile device may also be used by carrier organizations, which may not want to integrate an MPL application, either temporarily or permanently, in the mobile devices that they use for delivering parcels. An MPL application is installed in the local mobile device, eventually via a download from a remote server at the time of the on-site installation of the parcel locker, and is instantiated according to a user category when a user logs onto the local mobile device. The local mobile device may be operated in parallel with a network of mobile devices as previously described or may simple replace the network of mobile devices for some applications. In one embodiment, the local mobile device is fixedly mounted on a pedestal next to the parcel locker or on a bracket attached to a wall next to the parcel locker or directly attached onto a compartments cluster of the parcel locker. The local mobile device may be powered with similar autonomous means as the locking modules. For some applications, the local mobile device may be connected to a local electrical network when it is made available. However, the compartments cluster would remain autonomous for easily installing parcel lockers and easily swapping compartments or for easily upgrading or changing the parcel lockers configuration on site. Eventually, a local mobile device may operate several parcel lockers located in the same area. In a preferred embodiment, the local mobile device may be retro-fitted on existing parcel locker supporting short distance communication capabilities.

The parcel locker system and methods of the invention described above comprise parcel lockers constituted of autonomous compartments assembled together. However, it is easily understood by those skilled in the art that, in another embodiment of the invention, a single compartment can be used by itself in a standalone configuration without being assembled as part of a parcel locker. Such single standalone compartment may be used for home delivery or for single point delivery systems.

## Claims

1. An electronic locker system for parcel deposit and pick-up, comprising:
a remote shipping system (106),
a long distance communication network (104),
at least one mobile device (102) communicating via said long distance communication network with said remote shipping system,
at least one parcel locker (100) constituted of at least one autonomous compartment (110i) equipped with a door (112i) and a locking module (116i) having a radio transceiver (216) equipped with an antenna (218), which electronically controls locking and unlocking of said door and which establishes a local communication with said at least one mobile device via a short distance communication (118i),
wherein said locking module comprises:
an energy management module (230) configured for managing transitions of energy modes and allowing said at least one autonomous compartment to be run in a sleep mode in which said locking module cannot be wakened up by a mobile device proximate to the compartment, and
a processor (210) running a firmware configured for, when in said sleep mode, temporarily waking-up for broadcasting with said radio transceiver a short message with a repetition time period and actively listening to responses from mobile devices during a limited listening time window for establishing a communication session,
wherein said broadcasted short message includes a first unique compartment identification (250) stored in said locking module and identifying said at least one autonomous compartment, and status information (252, 253, 254) relative to said at least one autonomous compartment, wherein said status information comprises an events limit (252) and a compartment state (253) and a low power status (254) and wherein said at least one mobile device is configured for checking on whether a limit of events stored in the locking module has been reached and for checking on said compartment state for establishing whether said at least one autonomous compartment is empty or full before initiating a deposit in said at least one autonomous compartment and for checking on said low power status before initiating a communication with said at least one autonomous compartment.

2. The system according to claim 1, **characterized in that** several of said at least one autonomous compartment are mechanically fastened together to form a column (111n) and several of said columns of said at least one autonomous compartments are mechanically fastened together to form said at least one parcel, wherein said locking module is mounted on said door.

3. The system according to any one of claims 1 or 2, **characterized in that** a request from said at least one mobile device for establishing a local communication with said at least one autonomous compartment via said short distance communication includes a authenticator, preferably unique, comprising or sent with a second unique compartment identification (134i) wherein said firmware is configured for checking for a match between said first unique compartment identification stored in said locking module and said second unique compartment identification and wherein said remote shipping system is configured for generating said authenticator.

4. The system according to any one of claims 1 to 3, **characterized in that** said locking module includes a non-volatile memory (240) storing a functions table (260) comprising functions available for said at least one autonomous compartment and which can be run by said processor and **characterized in that** said authenticator includes a privileges mask identifying functions authorized for operating said at least one autonomous compartment amongst functions within said functions table wherein said privileges mask consists in a series of bits and a bit of said series of bits corresponds to a function of said functions table and a value of said bit indicates whether said function is authorized or not authorized, wherein said remote shipping system is configured for receiving and storing credentials of a user of said at least one parcel locker and for generating said privileges mask based on said credentials of said user.

5. The system according to any one of claims 1 to 4, **characterized in that** said firmware is configured for emitting said broadcasted short message with a repetition time period of 250ms within a range +/- 100ms, with a listening time window of 10ms within a range +20ms/-0ms, with a number of channels of two (2) or of three (3) preferably, and with a power emission parameter of 0dBm within a range +4dBm/-0dBm.

6. The system according to any one of claims 1 to 5, **characterized in that** said locking module comprises a lock interface (226) and an authorization code (270) uniquely associated with a unique parcel identification (136i) corresponding to a parcel deposited in said at least one autonomous compartment so that a parcel recipient without a mobile device may pick-up a parcel by entering said authorization code via said lock interface wherein said remote shipping server is configured for generating and storing said authorization code and for transmitting said authorization code to said locking module via said mobile device, and further **characterized in that** said at least one mobile device is fixedly mounted next to said at least one parcel locker or directly onto said at least one parcel locker and connected to a local electrical network.

7. A method for operating at least one parcel locker (100) constituted of at least one autonomous compartment (110i) having door with a locking module (116i) having a radio transceiver (216) equipped with an antenna (218), which electronically controls locking and unlocking of said door and which establishes a local communication with at least one mobile device (102) via a short distance communication;
the method comprising:
establishing a communication between said at least one mobile device and a remote shipping system via a long distance communication network (104),
temporarily waking-up, when in a sleep mode in which said locking module cannot be wakened up by a mobile device proximate to the compartment, for broadcasting by said locking module, with said radio transceiver, a short message with a repetition time period, and actively listening to responses from mobile devices during a limited listening time window for establishing a communication session, wherein said broadcasted short message includes a first unique compartment identification (250) stored in said locking module and identifying said at least one autonomous compartment, and status information relative to said at least one autonomous compartment,
wherein said status information comprises an events limit (252) and a compartment state (253) and a low power status (254) and wherein said at least one mobile device is configured for checking on whether a limit of events stored in the locking module has been reached and for checking on said compartment state for establishing whether said at least one autonomous compartment is empty or full before initiating a deposit in said at least one autonomous compartment and for checking on said low power status before initiating a communication with said at least one autonomous compartment

8. The method according to claim 7, further comprising:
requesting by said at least one mobile device from said remote shipping system said authenticator for establishing a communication with said at least one autonomous compartment after capturing a first said broadcasted short message including said first unique compartment identification (250) and said remote shipping system identifies said at least one parcel locker based on said first unique compartment identification (250) received from said at least one mobile device, wherein said authenticator is generated by the remote shipping system and includes or is sent with a second unique compartment identification (134i),
validating by said at least one autonomous compartment said authenticator received from said at least one mobile device, and
comparing by said at least one autonomous compartment said second unique compartment identification with said first unique compartment identification (250) stored in said locking module for establishing a communication or for authorizing an access.

9. The method according to claim 7 or claim 8, wherein said authenticator includes a privileges mask generated by said remote shipping system based on credentials of a user of said at least one parcel locker and wherein said at least one autonomous compartment uses said privileges mask for validating access to functions, which are authorized for said user, and wherein said at least one autonomous compartment identifies a function targeted by said request within a functions table (260) and checks whether said function is authorized by said privileges mask.

10. The method according to any one of claims 7 to 9, wherein said broadcasted short message comprises an events limit (252) indicating whether a limit for events stored in said locking module has been reached and wherein said at least one mobile device checks on said events limit for establishing whether a connection with said locking module is required for transferring events stored by said at least one autonomous compartment to said remote shipping system.

11. The method according to any one of claims 7 to 10, wherein said broadcasted short message is emitted according to parameters of a compartment broadcasting table (272) stored in said locking module, wherein said compartment broadcasting table is downloaded from said remote shipping server, and wherein said parameters of said compartment broadcasting table are adjusted via a wizard sub-program installed on said at least one mobile device.

12. The method according to any one of claims 7 to 11, wherein said shipping remote server provides a parcel locker configuration to said at least one mobile device for said at least one mobile device to operate said at least one parcel locker, and wherein said remote shipping server identifies said parcel locker configuration for download to said at least one mobile device based on said first unique compartment identification (250) comprised in said broadcasted short message and transferred to said remote shipping server by said at least one mobile device.

13. The method according to any one of claims 8 to 12, further comprising:
sending a request by said at least one mobile to said at least one autonomous compartment for unlocking for a parcel deposit, wherein said request includes said authenticator,
unlocking by said at least one autonomous compartment after authorizing said request, locking by said at least one autonomous compartment after deposit of said parcel,
generating by said remote shipping system a notification regarding said parcel deposited in said at least one autonomous compartment and including information for picking-up said parcel, after transfer of events stored by said locking module to said remote shipping server via said at least one mobile device,
receiving by said at least one mobile device said notification, which comprises said parcel identification and includes a functionality designed for transferring said authenticator to said at least one mobile device,
activating said functionality and transferring said parcel identification to said at least one mobile device,
accessing a web application hosted in said remote shipping system,
having, via said web application, said at least one mobile device requesting from said remote shipping system said authenticator for picking-up a parcel,
transferring said parcel identification to said remote shipping system from said at least one mobile device,
identifying by said remote shipping system said at least one parcel locker and said at least one autonomous compartment based on said parcel identification,
generating by said remote shipping system said authenticator, which is uniquely associated with said at least one autonomous compartment and which includes or is sent with a second unique compartment identification (134i) stored in said remote shipping system,
transferring said authenticator to said at least one mobile device,
for automatic unlock, capturing by said at least one mobile device said broadcasted short messages emitted by said at least one autonomous compartment,
checking by said at least one mobile device for a match between said second unique compartment identification (134i) received from said remote shipping system and said first unique compartment identification (250) received from said at least one autonomous compartment for identifying which compartment contains the recipient's parcel,
sending, in case of match, by said at least one mobile device a response message to said at least one autonomous compartment for establishing a communication so that said response message can be captured within a limited listening time window of said at least one autonomous compartment, wherein said response message includes said authenticator provided by said remote shipping server,
validating by said at least one autonomous compartment said authenticator for establishing a communication with said at least one mobile device,
sending by said at least one mobile device a request for said at least one autonomous compartment to unlock, and
unlocking by said at least one autonomous compartment for parcel pick-up.

14. The method according to any one of claims 7 to 12, further comprising:
generating by said remote shipping server a one-time authorization code, which is unique and uniquely associated with a unique parcel identification (136i) of said parcel,
receiving by said at least one mobile device from said remote shipping server said authorization code, when said parcel is due for deposit in said at least one autonomous compartment,
transferring by said at least one mobile device said authorization code to said at least one autonomous compartment so that a parcel recipient without a mobile device may pick-up said parcel by entering said authorization code via a lock interface (230),
generating by said remote shipping system a notification regarding said parcel deposited in said at least one autonomous compartment and including information for picking-up said parcel, after transfer of events stored by said locking module to said remote shipping server via said at least one mobile device, and
receiving by said at least one mobile device said notification, which comprises said parcel identification and wherein said information comprises said authorization code and a location of said at least one parcel locker and said parcel identification and a compartment identifier (138i) corresponding to a physical identifier attached on a visible part of said at least one autonomous compartment.

## Patentansprüche

1. Elektronisches Fachschranksystem zum Ablegen und Abholen von Paketen, umfassend:
ein entferntes Versandsystem (106),
ein Fernkommunikationsnetz (104),
mindestens eine mobile Vorrichtung (102), die über das Langstreckenkommunikationsnetz mit dem entfernten Versandsystem kommuniziert,
mindestens einen Paketfachschrank (100), der aus mindestens einem autonomen Fach (110i) besteht, das mit einer Tür (112i) und einem Verriegelungsmodul (116i) ausgestattet ist,, das einen Funk-Sendeempfänger (216) aufweist, der mit einer Antenne (218) ausgestattet ist, der ein Verriegeln und Entriegeln der Tür elektronische steuert und der über eine Kurzstreckenkommunikation (118i) eine lokale Kommunikation mit der mindestens einen mobilen Vorrichtung herstellt,
wobei das Verriegelungsmodul Folgendes umfasst:
ein Energiemanagementmodul (230), das zum Handhaben von Übergängen von Energiemodi konfiguriert ist und ermöglicht, dass das mindestens eine autonome Fach in einem Schlafmodus betrieben wird, in dem das Verriegelungsmodul nicht durch eine sich in der Nähe des Fachs befindliche mobile Vorrichtung aufgeweckt werden kann, und
einen Prozessor (210), der eine Firmware ausführt, die in dem Schlafmodus zum temporären Aufwachen zum Aussenden einer Kurznachricht mit dem Funk-Sendeempfänger in einem Wiederholungszeitintervall konfiguriert ist, und während eines begrenzten Abhörzeitfensters aktiv auf Antworten von mobilen Vorrichtungen zum Aufbauen einer Kommunikationssitzung lauscht,
wobei die ausgesendete Kurznachricht eine erste eindeutige Fachkennung (250), die in dem Verriegelungsmodul gespeichert ist, und das mindestens eine autonome Fach identifiziert, und Statusinformationen (252, 253, 254) in Bezug auf das mindestens eine autonomen Fach beinhaltet, wobei die Statusinformationen ein Ereignislimit (252), einen Fachstatus (253) und einen Niedrigenergiestatus (254) umfassen und wobei die mindestens eine mobile Vorrichtung konfiguriert ist, um zu überprüfen, ob ein in dem Verriegelungsmodul gespeichertes Ereignislimit erreicht wurde, und den Fachstatus zu überprüfen, um festzustellen, ob das mindestens eine autonome Fach leer oder voll ist, bevor ein Ablegen in das mindestens eine autonome Fach initiiert wird, und um den Niedrigenergiestatus zu überprüfen wird, bevor eine Kommunikation mit dem mindestens einen autonomen Fach initiiert wird.

2. System nach Anspruch 1, **dadurch gekennzeichnet, dass** mehrere von dem mindestens einen autonomen Fach mechanisch miteinander verbunden sind, um eine Säule (111n) zu bilden, und mehrere der Säulen von dem mindestens einen autonomen Fach mechanisch miteinander verbunden sind, um das mindestens eine Paket zu bilden, wobei das Verriegelungsmodul an der Tür montiert ist.

3. System nach einem der Ansprüche 1 oder 2, **dadurch gekennzeichnet, dass** eine Anforderung von der mindestens einen mobilen Vorrichtung zum Aufbauen einer lokalen Kommunikation mit dem mindestens einen autonomen Fach über die Kurzstreckenkommunikation einen vorzugsweise eindeutigen Authentifikator beinhaltet, der eine zweite eindeutige Fachkennung (134i) umfasst oder damit gesendet wird, wobei die Firmware konfiguriert ist, um eine Übereinstimmung zwischen der in dem Verriegelungsmodul gespeicherten ersten eindeutigen Fachkennung und der zweiten eindeutigen Fachkennung zu überprüfen, und wobei das entfernte Versandsystem konfiguriert ist, um den Authentifikator zu generieren.

4. System nach einem der Ansprüche 1 bis 3, **dadurch gekennzeichnet, dass** das Verriegelungsmodul einen nichtflüchtigen Speicher (240) beinhaltet, der eine Funktionstabelle (260) speichert, umfassend Funktionen, die für das mindestens eine autonome Fach verfügbar sind und die von dem Prozessor ausgeführt werden können, und **dadurch gekennzeichnet, dass** der Authentifikator eine Berechtigungsmaske beinhaltet, die Funktionen identifiziert, die zum Betreiben des mindestens einen autonomen Fachs unter den Funktionen der Funktionstabelle autorisiert sind, wobei die Berechtigungsmaske aus einer Bitreihe besteht und ein Bit der Bitreihe einer Funktion der Funktionstabelle entspricht und ein Wert des Bits angibt, ob die Funktion autorisiert oder nicht autorisiert ist, wobei das entfernte Versandsystem konfiguriert ist, um Anmeldedaten eines Benutzers des mindestens einen Paketfachschranks zu empfangen und zu speichern und um die Berechtigungsmaske basierend auf den Anmeldedaten des Benutzers zu generieren.

5. System nach einem der Ansprüche 1 bis 4, **dadurch gekennzeichnet, dass** die Firmware konfiguriert ist, um die ausgesendete Kurznachricht mit einem Wiederholungszeitintervall von 250 ms in einem Bereich von +/- 100 ms, mit einem Lauschzeitfenster von 10 ms in einem Bereich von +20 ms/-0 ms, mit einer Kanalanzahl von vorzugsweise zwei (2) oder drei (3) und mit einem Sendeleistungsparameter von 0 dBm in einem Bereich von +4 dBm/-0 dBm zu emittieren.

6. System nach einem der Ansprüche 1 bis 5, **dadurch gekennzeichnet, dass** das Verriegelungsmodul eine Schlossschnittstelle (226) und einen Autorisierungscode (270) umfasst, der eindeutig mit einer eindeutigen Paketkennung (136i) assoziiert ist, die einem Paket entspricht, das in dem mindestens einen autonomen Fach abgelegt ist, sodass ein Paketempfänger ein Paket ohne mobile Vorrichtung durch Eingeben des Autorisierungscodes über die Schlossschnittstelle abholen kann, wobei der entfernte Versand-Server konfiguriert ist, um den Autorisierungscode zu generieren und zu speichern und den Autorisierungscode über die mobile Vorrichtung an das Verriegelungsmodul zu übertragen, und ferner **dadurch gekennzeichnet, dass** die mindestens eine mobile Vorrichtung fest neben dem mindestens einen Paketfachschrank oder direkt an dem mindestens einen Paketfachschrank montiert und mit einem lokalen Stromnetz verbunden ist.

7. Verfahren zum Betreiben von mindestens einem Paketfachschrank (100), das aus mindestens einem autonomen Fach (110i) besteht, das eine Tür mit einem Verriegelungsmodul (116i) aufweist, das einen Funk-Sendeempfänger (216) aufweist, der mit einer Antenne (218) ausgestattet ist, das ein Verriegeln und Entriegeln der Tür elektronisch steuert und das über eine Kurzstreckenkommunikation eine lokale Kommunikation mit mindestens einer mobilen Vorrichtung (102) aufbaut;
das Verfahren umfassend:
Aufbauen einer Kommunikation zwischen der mindestens einen mobilen Vorrichtung und einem entfernten Versandsystem über ein Langstreckenkommunikationsnetz (104),
wenn in einem Schlafmodus, in dem das Verriegelungsmodul nicht durch eine sich in der Nähe des Fachs befindliche mobile Vorrichtung aufgeweckt werden kann, temporäres Aufwecken zum Aussenden, durch das Verriegelungsmodul mit dem Funk-Sendeempfänger, einer Kurznachricht mit einem Wiederholungszeitintervall und aktivem Lauschen auf Antworten von mobilen Vorrichtungen während eines begrenzten Lauschzeitfensters zum Aufbauen einer Kommunikationssitzung, wobei die ausgesendete Kurznachricht eine erste eindeutige Fachkennung (250), die in dem Verriegelungsmodul gespeichert ist, und das mindestens eine autonome Fach identifiziert, und Statusinformationen in Bezug auf das mindestens eine autonome Fachs beinhaltet,
wobei die Statusinformationen ein Ereignislimit (252) und einen Fachstatus (253) und einen Niedrigenergiestatus (254) umfassen und wobei die mindestens eine mobile Vorrichtung konfiguriert ist, um zu überprüfen, ob ein in dem Verriegelungsmodul gespeichertes Ereignislimit erreicht wurde, und den Fachstatus zu überprüfen, um festzustellen, ob das mindestens eine autonome Fach leer oder voll ist, bevor ein Ablegen in das mindestens eine autonome Fach initiiert wird, und um den Niedrigenergiestatus zu überprüfen, bevor eine Kommunikation mit dem mindestens einen autonomen Fach initiiert wird.

8. Verfahren nach Anspruch 7, ferner umfassend:
Anfordern, durch die mindestens eine mobile Vorrichtung von dem entfernten Versandsystem, des Authentifikators zum Aufbauen einer Kommunikation mit dem mindestens einen autonomen Fach nach Erfassen einer ersten ausgesendeten Kurznachricht, die die erste eindeutige Fachkennung (250) beinhaltet, und Identifizieren des mindestens einen Paketfachschranks anhand der von der mindestens einen mobilen Vorrichtung empfangenen ersten eindeutigen Fachkennung (250), wobei der Authentifikator durch das entfernte Versandsystem generiert wird und eine zweite eindeutige Fachkennung (134i) beinhaltet oder damit gesendet wird,
Validieren, durch das mindestens eine autonome Fach, des Authentifikators, der von der mindestens einen mobilen Vorrichtung empfangen wird, und
Vergleichen, durch das mindestens eine autonome Fach, der zweiten eindeutigen Fachkennung mit der in dem Verriegelungsmodul gespeicherten ersten eindeutigen Fachkennung (250) zum Aufbauen einer Kommunikation oder zum Autorisieren eines Zugriffs.

9. Verfahren nach Anspruch 7 oder Anspruch 8, wobei der Authentifikator eine Berechtigungsmaske beinhaltet, die von dem entfernten Versandsystem basierend auf den Anmeldedaten eines Benutzers des mindestens einen Paketfachschranks generiert wird, und wobei das mindestens eine autonome Fach die Berechtigungsmaske zum Validierung eines Zugriffs auf Funktionen verwendet, die für den Benutzer autorisiert sind, und wobei das mindestens eine autonome Fach eine durch die Anforderung adressierte Funktion innerhalb einer Funktionstabelle (260) identifiziert und überprüft, ob die Funktion durch die Berechtigungsmaske autorisiert ist.

10. Verfahren nach einem der Ansprüche 7 bis 9, wobei die ausgesendete Kurznachricht ein Ereignislimit (252) umfasst, das angibt, ob ein Limit für Ereignisse erreicht wurde, das in dem Verriegelungsmodul gespeichert ist, und wobei die mindestens eine mobile Vorrichtung das Ereignislimit überprüft, um festzustellen, ob eine Verbindung mit dem Verriegelungsmodul erforderlich ist, um von dem mindestens einen autonomen Fach gespeicherte Ereignisse an das entfernte Versandsystem zu übertragen.

11. Verfahren nach einem der Ansprüche 7 bis 10, wobei die ausgesendete Kurznachricht gemäß Parametern einer in dem Verriegelungsmodul gespeicherten Fach-Aussendetabelle (272) ausgesendet wird, wobei die Fach-Aussendetabelle von dem entfernten Versand-Server heruntergeladen wird und wobei die Parameter der Fach-Aussendetabelle über ein auf der mindestens einen mobilen Vorrichtung installiertes Assistenten-Teilprogramm angepasst werden.

12. Verfahren nach einem der Ansprüche 7 bis 11, wobei der entfernte Versand-Server der mindestens einen mobilen Vorrichtung eine Paketfachschrank-Konfiguration bereitstellt, damit die mindestens eine mobile Vorrichtung den mindestens einen Paketfachschrank betreibt, und wobei der entfernte Versand-Server die Paketfachschrank-Konfiguration zum Herunterladen auf die mindestens eine mobile Vorrichtung anhand der in der ausgesendeten Kurznachricht enthaltenen ersten eindeutigen Fachkennung (250), die von der mindestens einen mobilen Vorrichtung an den entfernten Versand-Server übertragen wird, identifiziert.

13. Verfahren nach einem der Ansprüche 8 bis 12, ferner umfassend:
Senden einer Anforderung durch die mindestens eine mobile Vorrichtung an das mindestens eine autonome Fach zum Entriegeln, um ein Paket abzulegen, wobei die Anforderung den Authentifikator umfasst,
Entriegeln, durch das mindestens eine autonome Fach nach Autorisieren der Anforderung, Verriegeln durch das mindestens eine autonome Fach nach Ablegen des Pakets,
Generieren, durch das entfernte Versandsystem, einer Benachrichtigung bezüglich des in dem mindestens einen autonomen Fach abgelegten Pakets und einschließlich Informationen zum Abholen des Pakets, nach Übertragen von in dem Verriegelungsmodul gespeicherten Ereignissen an den entfernten Versand-Server über die mindestens eine mobile Vorrichtung,
Empfangen, durch die mindestens eine mobile Vorrichtung, der Benachrichtigung, die die Paketkennung umfasst und eine Funktionalität beinhaltet, die zum Übertragen des Authentifikators an die mindestens eine mobile Vorrichtung konstruiert ist,
Aktivieren der Funktionalität und Übertragen der Paketkennung an die mindestens eine mobile Vorrichtung,
Zugreifen auf eine in dem entfernten Versandsystem gehostete Webanwendung,
Veranlassen, über die Webanwendung, dass die mindestens eine mobile Vorrichtung von dem entfernten Versandsystem den Authentifikator zum Abholen eines Pakets anfordert,
Übertragen der Paketkennung von der mindestens einen mobilen Vorrichtung an das entfernte Versandsystem,
Identifizieren, durch das entfernte Versandsystem, des mindestens einen Paketfachschranks und des mindestens einen autonomen Fachs basierend auf der Paketkennung,
Generieren, durch das entfernte Versandsystem, des Authentifikators, der eindeutig mit dem mindestens einen autonomen Fach assoziiert ist und der eine zweite eindeutige Fachkennung (134i) beinhaltet oder damit gesendet wird, die in dem entfernten Versandsystem gespeichert ist,
Übertragen des Authentifikators an die mindestens eine mobile Vorrichtung,
zum automatischen Entriegeln, Erfassen, durch die mindestens eine mobile Vorrichtung, der ausgesendeten Kurznachrichten, die von dem mindestens einen autonomen Fach ausgesendet werden,
Überprüfen, durch die mindestens eine mobile Vorrichtung, auf eine Übereinstimmung zwischen der zweiten eindeutigen Fachkennung (134i), die von dem entfernten Versandsystem empfangen wird, und der ersten eindeutigen Fachkennung (250), die von dem mindestens einen autonomen Fach empfangen wird, um zu identifizieren, welches Fach das Paket des Empfängers enthält,
Senden, im Fall einer Übereinstimmung, durch die mindestens eine mobile Vorrichtung, einer Antwortnachricht an das mindestens eine autonome Fach zum Aufbauen einer Kommunikation, sodass die Antwortnachricht innerhalb eines begrenzten Lauschzeitfensters des mindestens einen autonomen Fachs erfasst werden kann, wobei die Antwortnachricht den Authentifikator beinhaltet, der von dem entfernten Versand-Server bereitgestellt wird,
Validieren, durch das mindestens eine autonome Fach, des Authentifikators zum Aufbauen einer Kommunikation mit der mindestens einen mobilen Vorrichtung,
Senden, durch die mindestens eine mobile Vorrichtung, einer Anforderung an das mindestens eine autonome Fach, um zu entriegeln, und
Entriegeln durch das mindestens eine autonome Fach zum Abholen des Pakets.

14. Verfahren nach einem der Ansprüche 7 bis 12, ferner umfassend:
Generieren, durch den entfernten Versand-Server, eines einmaligen Autorisierungscodes der eindeutig ist und eindeutig mit einer eindeutigen Paketkennung (136i) des Pakets assoziiert ist,
Empfangen, durch die mindestens eine mobile Vorrichtung, des Autorisierungscodes von dem entfernten Versand-Server, wenn das Paket zum Ablegen in das mindestens eine autonome Fach vorgesehen ist,
Übertragen, durch die mindestens eine mobile Vorrichtung, des Autorisierungscodes an das mindestens eine autonome Fach, sodass ein Paketempfänger ohne mobile Vorrichtung das Paket durch Eingeben des Autorisierungscodes über eine Schlossschnittstelle (230) abholen kann,
Generieren, durch das entfernte Versandsystem, einer Benachrichtigung bezüglich des in dem mindestens einen autonomen Fach abgelegten Pakets und einschließlich Informationen zum Abholen des Pakets, nach Übertragen von in dem Verriegelungsmodul gespeicherten Ereignissen durch die mindestens eine mobile Vorrichtung an den entfernten Versand-Server, und
Empfangen durch die mindestens eine mobile Vorrichtung, der Benachrichtigung die die Paketkennung umfasst und wobei die Informationen den Autorisierungscode und einen Standort des mindestens einen Paketfachschranks und die Paketkennung und einen Fachidentifikator (138i) umfassen, der einem physischen Identifikator entspricht, der auf einem sichtbaren Teil des mindestens einen autonomen Fachs angebracht ist.

## Revendications

1. Système de consigne électronique pour le dépôt et le retrait de colis, comprenant :
un système d'expédition distant (106),
un réseau de communication longue distance (104),
au moins un dispositif mobile (102) communiquant via ledit réseau de communication longue distance avec ledit système d'expédition distant,
au moins une consigne à colis (100) constituée d'au moins un compartiment autonome (110i) équipé d'une porte (112i) et d'un module de verrouillage (116i) doté d'un émetteur-récepteur radio (216) équipé d'une antenne (218), qui commande électroniquement le verrouillage et le déverrouillage de ladite porte et qui établit une communication locale avec ledit au moins un dispositif mobile via une communication courte distance (118i),
dans lequel ledit module de verrouillage comprend :
un module de gestion d'énergie (230) configuré pour gérer les transitions des modes d'énergie et permettant audit au moins un compartiment autonome de fonctionner dans un mode veille dans lequel ledit module de verrouillage ne peut pas être réveillé par un dispositif mobile à proximité du compartiment, et
un processeur (210) exécutant un micrologiciel configuré pour, lorsqu'il est en mode veille, se réveiller temporairement pour diffuser, à l'aide dudit émetteur-récepteur radio, un message court avec une période de répétition et écouter activement les réponses des dispositifs mobiles pendant une fenêtre de temps d'écoute limitée afin d'établir une session de communication,
dans lequel ledit court message diffusé comprend un premier identifiant unique de compartiment (250) stocké dans ledit module de verrouillage et identifiant ledit au moins un compartiment autonome, et des informations d'état (252, 253, 254) relatives audit au moins un compartiment autonome, dans lequel lesdites informations d'état comprennent une limite d'événements (252) et un état de compartiment (253) et un état de faible puissance (254) et dans lequel ledit au moins un dispositif mobile est configuré pour vérifier si une limite d'événements stockés dans le module de verrouillage a été atteinte et pour vérifier ledit état de compartiment afin de déterminer si ledit au moins un compartiment autonome est vide ou plein avant d'initier un dépôt dans ledit au moins un compartiment autonome et pour vérifier ledit état de faible puissance avant d'initier une communication avec ledit au moins un compartiment autonome.

2. Système selon la revendication 1, **caractérisé en ce que** plusieurs compartiments dudit au moins un compartiment autonome sont fixés mécaniquement ensemble pour former une colonne (111n) et plusieurs desdites colonnes dudit au moins un compartiment autonome sont fixées mécaniquement ensemble pour former ladite au moins une consigne à colis, dans lequel ledit module de verrouillage est monté sur ladite porte.

3. Système selon l'une quelconque des revendications 1 ou 2, **caractérisé en ce qu'**une demande dudit au moins un dispositif mobile pour établir une communication locale avec ledit au moins un compartiment autonome via ladite communication courte distance comprend un authentificateur, de préférence unique, comprenant ou envoyé avec un deuxième identifiant unique de compartiment (134i), dans lequel ledit micrologiciel est configuré pour vérifier la correspondance entre ledit premier identifiant unique de compartiment stocké dans ledit module de verrouillage et ledit deuxième identifiant unique de compartiment, et dans lequel ledit système d'expédition distant est configuré pour générer ledit authentificateur.

4. Système selon l'une quelconque des revendications 1 à 3, **caractérisé en ce que** ledit module de verrouillage comprend une mémoire non volatile (240) stockant une table de fonctions (260) comprenant des fonctions disponibles pour ledit au moins un compartiment autonome et pouvant être exécutées par ledit processeur, et **caractérisé en ce que** ledit authentificateur comprend un masque de privilèges identifiant les fonctions autorisées pour le fonctionnement dudit au moins un compartiment autonome parmi les fonctions de ladite table de fonctions, dans lequel ledit masque de privilèges consiste en une série de bits et un bit de ladite série de bits correspond à une fonction de ladite table de fonctions et une valeur dudit bit indique si ladite fonction est autorisée ou non autorisée, dans lequel ledit système d'expédition distant est configuré pour recevoir et stocker les justificatifs d'identité d'un utilisateur de ladite au moins une consigne à colis et pour générer ledit masque de privilèges sur la base desdits justificatifs d'identité dudit utilisateur.

5. Système selon l'une quelconque des revendications 1 à 4, **caractérisé en ce que** ledit micrologiciel est configuré pour diffuser ledit court message avec une période de répétition de 250 ms dans une plage de +/- 100 ms, avec une fenêtre de temps d'écoute de 10 ms dans une plage de +20 ms/-0 ms, avec un nombre de canaux égal à deux (2) ou trois (3) de préférence, et avec un paramètre de puissance d'émission de 0 dBm dans une plage de +4 dBm/-0 dBm.

6. Système selon l'une quelconque des revendications 1 à 5, **caractérisé en ce que** ledit module de verrouillage comprend une interface de verrouillage (226) et un code d'autorisation (270) associé de manière unique à un identifiant unique de colis (136i) correspondant à un colis déposé dans ledit au moins un compartiment autonome, de sorte qu'un destinataire de colis dépourvu de dispositif mobile peut retirer un colis en saisissant ledit code d'autorisation via ladite interface de verrouillage, dans lequel ledit serveur d'expédition distant est configuré pour générer et stocker ledit code d'autorisation et pour transmettre ledit code d'autorisation audit module de verrouillage via ledit dispositif mobile, et **caractérisé en outre en ce que** ledit au moins un dispositif mobile est monté à demeure à côté de ladite au moins une consigne à colis ou directement sur ladite au moins une consigne à colis et est connecté à un réseau électrique local.

7. Procédé de fonctionnement d'au moins une consigne à colis (100) constituée d'au moins un compartiment autonome (110i) ayant une porte avec un module de verrouillage (116i) doté d'un émetteur-récepteur radio (216) équipé d'une antenne (218), qui commande électroniquement le verrouillage et le déverrouillage de ladite porte et qui établit une communication locale avec au moins un dispositif mobile (102) via une communication courte distance ;
le procédé comprenant :
l'établissement d'une communication entre ledit au moins un dispositif mobile et un système d'expédition distant via un réseau de communication longue distance (104),
le réveil temporaire, lorsqu'il est dans un mode veille dans lequel ledit module de verrouillage ne peut pas être réveillé par un dispositif mobile à proximité du compartiment, pour l'émission, par ledit module de verrouillage, à l'aide dudit émetteur-récepteur radio, d'un court message avec une période de répétition, et l'écoute active de réponses de dispositifs mobiles pendant une fenêtre de temps d'écoute limitée pour établir une session de communication, dans lequel ledit court message diffusé comprend un premier identifiant unique de compartiment (250) stocké dans ledit module de verrouillage et identifiant ledit au moins un compartiment autonome, et des informations d'état relatives audit au moins un compartiment autonome,
dans lequel lesdites informations d'état comprennent une limite d'événements (252) et un état de compartiment (253) et un état de faible puissance (254) et dans lequel ledit au moins un dispositif mobile est configuré pour vérifier si une limite d'événements stockés dans le module de verrouillage a été atteinte et pour vérifier ledit état de compartiment afin de déterminer si ledit au moins un compartiment autonome est vide ou plein avant d'initier un dépôt dans ledit au moins un compartiment autonome et pour vérifier ledit état de faible puissance avant d'initier une communication avec ledit au moins un compartiment autonome.

8. Procédé selon la revendication 7, comprenant en outre :
la demande, par ledit au moins un dispositif mobile, audit système d'expédition distant, dudit authentificateur, pour établir une communication avec ledit au moins un compartiment autonome après la capture d'un premier court message diffusé comprenant ledit premier identifiant unique de compartiment (250), et l'identification, par ledit système d'expédition distant, de ladite au moins une consigne à colis, sur la base dudit premier identifiant unique de compartiment (250) reçue dudit au moins un dispositif mobile, dans lequel ledit authentificateur est généré par le système d'expédition distant et comprend ou est envoyé avec un deuxième identifiant unique de compartiment (134i),
la validation, par ledit au moins un compartiment autonome, dudit authentificateur reçu dudit au moins un dispositif mobile, et
la comparaison, par ledit au moins un compartiment autonome, dudit deuxième identifiant unique de compartiment avec ledit premier identifiant unique de compartiment (250) stocké dans ledit module de verrouillage pour établir une communication ou pour autoriser un accès.

9. Procédé selon la revendication 7 ou 8, dans lequel ledit authentificateur comprend un masque de privilèges généré par ledit système d'expédition distant sur la base des justificatifs d'identité d'un utilisateur de ladite au moins une consigne à colis et dans lequel ledit au moins un compartiment autonome utilise ledit masque de privilèges pour valider l'accès aux fonctions qui sont autorisées pour ledit utilisateur, et dans lequel ledit au moins un compartiment autonome identifie une fonction ciblée par ladite demande dans une table de fonctions (260) et vérifie si ladite fonction est autorisée par ledit masque de privilèges.

10. Procédé selon l'une quelconque des revendications 7 à 9, dans lequel ledit court message diffusé comprend une limite d'événements (252) indiquant si une limite d'événements stockés dans ledit module de verrouillage a été atteinte et dans lequel ledit au moins un dispositif mobile vérifie ladite limite d'événements pour déterminer si une connexion avec ledit module de verrouillage est requise pour transférer les événements stockés par ledit au moins un compartiment autonome vers ledit système d'expédition distant.

11. Procédé selon l'une quelconque des revendications 7 à 10, dans lequel ledit court message diffusé est émis selon des paramètres d'une table de diffusion de compartiment (272) stockée dans ledit module de verrouillage, dans lequel ladite table de diffusion de compartiment est téléchargée depuis le serveur d'expédition distant, et dans lequel lesdits paramètres de ladite table de diffusion de compartiment sont ajustés via un sous-programme assistant installé sur ledit au moins un dispositif mobile.

12. Procédé selon l'une quelconque des revendications 7 à 11, dans lequel ledit serveur d'expédition distant fournit une configuration de consigne à colis audit au moins un dispositif mobile pour permettre audit au moins un dispositif mobile de faire fonctionner ladite au moins une consigne à colis, et dans lequel ledit serveur d'expédition distant identifie ladite configuration de consigne à colis à télécharger sur ledit au moins un dispositif mobile sur la base dudit premier identifiant unique de compartiment (250) compris dans ledit court message diffusé et transféré audit serveur d'expédition distant par ledit au moins un dispositif mobile.

13. Procédé selon l'une quelconque des revendications 8 à 12, comprenant en outre :
l'envoi d'une demande, par ledit au moins un dispositif mobile, audit au moins un compartiment autonome, de déverrouillage en vue d'un dépôt de colis, ladite demande comprenant ledit authentificateur,
le déverrouillage, par ledit au moins un compartiment autonome, après autorisation de ladite demande, et le verrouillage, par ledit au moins un compartiment autonome, après le dépôt dudit colis,
la génération, par ledit système d'expédition distant, d'une notification concernant ledit colis déposé dans ledit au moins un compartiment autonome et comprenant des informations pour le retrait dudit colis, après transfert des événements stockés par ledit module de verrouillage vers ledit serveur d'expédition distant via ledit au moins un dispositif mobile,
la réception, par ledit au moins un dispositif mobile, de ladite notification, laquelle comprend ledit identifiant de colis et inclut une fonctionnalité conçue pour transférer ledit authentificateur audit au moins un dispositif mobile,
l'activation de ladite fonctionnalité et le transfert dudit identifiant de colis audit au moins un dispositif mobile,
l'accès à une application web hébergée dans ledit système d'expédition distant,
la demande, via ladite application web, par ledit au moins un dispositif mobile, audit système d'expédition distant, dudit authentificateur, pour le retrait d'un colis,
le transfert dudit identifiant de colis audit système d'expédition distant, depuis ledit au moins un dispositif mobile,
l'identification, par ledit système d'expédition distant, de ladite au moins une consigne à colis et dudit au moins un compartiment autonome sur la base de ledit identifiant de colis,
la génération, par ledit système d'expédition distant, dudit authentificateur, lequel est associé de manière unique audit au moins un compartiment autonome et qui comprend ou est envoyé avec un deuxième identifiant unique de compartiment (134i) stocké dans ledit système d'expédition distant,
le transfert dudit authentificateur audit au moins un dispositif mobile,
pour le déverrouillage automatique, la capture, par ledit au moins un dispositif mobile, desdits messages courts diffusés émis par ledit au moins un compartiment autonome,
la vérification, par ledit au moins un dispositif mobile, d'une correspondance entre ledit deuxième identifiant unique de compartiment (134i) reçue du système d'expédition distant et ledit premier identifiant unique de compartiment (250) reçu dudit au moins un compartiment autonome, afin d'identifier quel compartiment contient le colis du destinataire,
l'envoi, en cas de correspondance, par ledit au moins un dispositif mobile, d'un message de réponse audit au moins un compartiment autonome, afin d'établir une communication, de sorte que ledit message de réponse peut être capturé dans une fenêtre de temps d'écoute limitée dudit au moins un compartiment autonome, ledit message de réponse comprenant ledit authentificateur fourni par ledit serveur d'expédition distant,
la validation, par ledit au moins un compartiment autonome, dudit authentificateur, afin d'établir une communication avec ledit au moins un dispositif mobile,
l'envoi, par ledit au moins un dispositif mobile, d'une demande de déverrouillage dudit au moins un compartiment autonome, et
le déverrouillage, par ledit au moins un compartiment autonome, pour le retrait du colis.

14. Procédé selon l'une quelconque des revendications 7 à 12, comprenant en outre :
la génération, par ledit serveur d'expédition distant, d'un code d'autorisation à usage unique, lequel est unique et associé de manière unique à un identifiant unique de colis (136i) dudit colis,
la réception, par ledit au moins un dispositif mobile, dudit code d'autorisation, en provenance dudit serveur d'expédition distant, lorsque ledit colis doit être déposé dans ledit au moins un compartiment autonome,
le transfert, par ledit au moins un dispositif mobile, dudit code d'autorisation, audit au moins un compartiment autonome, de sorte qu'un destinataire de colis dépourvu de dispositif mobile peut retirer ledit colis en saisissant ledit code d'autorisation via une interface de verrouillage (230),
la génération, par ledit système d'expédition distant, d'une notification concernant ledit colis déposé dans ledit au moins un compartiment autonome et comprenant des informations pour le retrait dudit colis, après transfert des événements stockés par ledit module de verrouillage vers ledit serveur d'expédition distant via ledit au moins un dispositif mobile, et
la réception, par ledit au moins un dispositif mobile, de ladite notification, laquelle comprend ledit identifiant de colis et dans laquelle lesdites informations comprennent ledit code d'autorisation et un emplacement de ladite au moins une consigne à colis ainsi que ledit identifiant de colis et un identifiant de compartiment (138i) correspondant à un identifiant physique apposé sur une partie visible dudit au moins un compartiment autonome.
